# EUROPEAN PATENT SPECIFICATION

(11) **EP 3 544 933 B1**
(45) Date of publication and mention of the grant of the patent: **02.09.2020**
(21) Application number: 17805246.0
(22) Date of filing: 23.11.2017
(51) Int. Cl.: C03B 23/023

(54) **METHOD OF SHAPING A GLASS SHEET AND BENDING TOOL UTILIZED THEREIN**
VERFAHREN ZUR FORMGEBUNG EINER GLASSCHEIBE UND DARIN VERWENDETES BIEGEWERKZEUG
PROCÉDÉ DE MISE EN FORME D'UNE FEUILLE DE VERRE ET OUTIL DE CINTRAGE UTILISÉ DANS CELUI-CI

(30) Priority: 23.11.2016 US 201662425954 P
(43) Date of publication of application: 02.10.2019
(73) Proprietor: Pilkington Group Limited, Nr. Ormskirk, Lancashire L40 5UF (GB)
(72) Inventor: BOISSELLE, Robert J, Maumee, Ohio 43537 (US); TOMIK, John Stephan, Lasalle, Michigan 48145 (US)
(74) Representative: Stanley, Andrew Thomas
(86) International application number: PCT/GB2017/053527
(87) International publication number: WO 2018/096339

(56) References cited:
- WO-A1-2016/141041
- WO-A2-03/004424
- US-A- 2 840 953
- US-A1- 2013 091 896

## Description

### CROSS-REFERENCE TO RELATED APPLICATION

This application is claiming the benefit, under 35 U.S. C. 119(e), of the provisional U.S. patent application which was granted Serial No. 62/425,954 and filed on November 23, 2016.

### BACKGROUND OF THE INVENTION

The invention relates to shaping a glass sheet, especially using opposing bending tools. The invention also relates to a method of shaping a glass sheet and a bending tool utilized therein that improves shaping.

Various processes are known for shaping or bending a sheet of glass. Typically, a glass sheet is heated to a temperature where the glass sheet is deformable and then the bending process is carried out. In certain bending processes, the heated glass sheet is supported on a ring member and allowed to sag under the influence of gravity, with or without the assistance of an additional pressing force. Another known glass sheet bending process is a press bending process whereby a glass sheet (or a nested pair) is bent between a pair of complementary shaping members, usually in a spaced vertical relationship. Following bending, the glass sheet should possess a desired shape, be dimensionally stable, and not be optically distorted. Otherwise, the bending process results in waste or products that possess poor quality.

One factor that may result in waste or products that possess poor quality is the position of the heated glass sheet in relation to one or more of the bending tools. Prior to being bent, the glass sheet may be heated to the bending temperature in an associated furnace and moved using a series of rollers. Unfortunately, the known processes only facilitate positioning the glass sheet on the rollers and prior to entry of the glass sheet into the furnace. Consequently, alignment of the glass sheet before bending may not be ideal.

WO03004424A2 discloses a method for designing a glass-plate-aimed bending mold making use of a 3-dimensional CAD application for solid models, in a short time with simple operations, by utilizing a previously designed solid model.

WO2016141041A1 discloses a system for shaping glass sheets for use in solar collectors that may include an oven and an adjustable mold.

Thus, it would be advantageous to develop a method of shaping a glass sheet and a bending tool that overcomes the aforementioned problems.

Accordingly the present invention provides from a first aspect a method of shaping a glass sheet, comprising: providing a glass sheet; heating the glass sheet to a temperature suitable for shaping; depositing the glass sheet on a first bending tool, the glass sheet being disposed over a first segment of the first bending tool, the first segment at least partially defining a shaping surface of the first bending tool; moving the first segment of the first bending tool from a first position to a second position to cause contact with a first portion of the glass sheet, the contact with the first portion of the glass sheet adjusting a position of the glass sheet relative to the shaping surface of the first bending tool; and shaping the glass sheet on the first bending tool.

Preferably the glass sheet is shaped on the first bending tool by press bending the glass sheet between the first bending tool and a second bending tool.

Preferably the method further comprises supporting the glass sheet on the shaping surface of the first bending tool.

Preferably the method further comprises moving the first segment from the second position to the first position prior to the glass sheet being disposed over the first segment of the first bending tool.

Preferably the method further comprises moving a second segment of the first bending tool from a first position to a second position to cause contact with a second portion of the glass sheet, the contact with the second portion of the glass sheet adjusting the position of the glass sheet relative to the shaping surface of the first bending tool, wherein movement of the second segment of the first bending tool from the first position to the second position is in a direction which is toward the first segment of the first bending tool.

Preferably the method further comprises moving another segment of the first bending tool from a first position to a second position, wherein movement of the another segment of the first bending tool is in a direction which is perpendicular to a direction of movement of the first segment.

Preferably the method further comprises moving another segment of the first bending tool to cause contact with another portion of the glass sheet, the contact with another portion of the glass sheet adjusting the position of the glass sheet relative to the shaping surface of the first bending tool, wherein movement of the first segment of the first bending tool is in a direction which is perpendicular to a direction of glass travel and movement of the another segment of the first bending tool is in a direction of glass travel.

Preferably the method further comprises moving another segment of the first bending tool, wherein movement of the another segment of the first bending tool is in a direction which is opposite a direction of glass travel.

Preferably the method further comprises adjusting the position of the glass sheet relative to the shaping surface of the first bending tool prior to depositing the glass sheet on the first bending tool.

Preferably movement of the first segment of the first bending tool from the first position to the second position is in a direction which is perpendicular to a direction of glass travel.

Preferably the first portion of the glass sheet is a first pillar edge portion of the glass sheet and after moving the first segment of the first bending tool from the first position to the second position the first pillar edge of the glass sheet abuts an end surface of a first positioning assembly.

Preferably the first portion of the glass sheet is contacted by a first positioning assembly and a second positioning assembly, the first positioning assembly and the second positioning assembly being spaced apart from each other, wherein the first positioning assembly and the second positioning assembly each move with the first segment and in a direction which is toward the glass sheet prior to contacting the glass sheet.

Preferably the first portion of the glass sheet is an edge portion of the glass sheet.

In some embodiments movement of the first segment of the first bending tool from the first position to the second position is in a direction which is toward a second segment of the first bending tool.

In these embodiments preferably the method further comprises moving the second segment of the first bending tool from a first position to a second position to cause contact with a second portion of the glass sheet, the contact with the second portion of the glass sheet adjusting the position of the glass sheet relative to the shaping surface of the first bending tool, wherein movement of the first segment of the first bending tool and movement of the second segment of the first bending tool is in a direction which is perpendicular to a direction of glass travel.

Preferably the method further comprises moving a third segment of the first bending tool from a first position to a second position to cause contact with a third portion of the glass sheet, the contact with the third portion of the glass sheet adjusting the position of the glass sheet relative to the shaping surface of the first bending tool, wherein movement of the third segment of the first bending tool is in a direction which is perpendicular to a direction of movement of the first segment and is toward a fourth segment of the first bending tool.

Preferably the method further comprises disposing the glass sheet over a fourth segment of the first bending tool and causing contact with a fourth portion of the glass sheet to adjust the position of the glass sheet relative to the shaping surface of the first bending tool.

Preferably the first segment, second segment, third segment, and fourth segment are configured as a ring which supports the glass sheet in a peripheral region thereof.

Preferably the glass sheet is also disposed over the second segment of the first bending tool and the third segment of the first bending tool and the first segment of the first bending tool, second segment of the first bending tool, third segment of the first bending tool, and fourth segment of the first bending tool each define a discrete portion of the shaping surface.

Preferably the fourth segment of the first bending tool does not move toward the third segment of the first bending tool.

Preferably the fourth portion of the glass sheet is a leading edge portion of the glass sheet and the leading edge portion of the glass sheet is contacted by a stopper to regulate the position of the glass sheet relative to the shaping surface of the first bending tool and after contact with the leading edge portion of the glass sheet the stopper moves away from the leading edge portion of the glass sheet.

Preferably the stopper moves away from the leading edge portion of the glass sheet vertically in a downward direction or in a direction of glass travel.

In some embodiments the first bending tool comprises a first segment, a second segment, a third segment, and a fourth segment.

Preferably the first segment, second segment, third segment, and fourth segment are configured as a ring which supports the glass sheet in a peripheral region thereof.

Preferably the glass sheet is also disposed over the second segment of the first bending tool and the third segment of the first bending tool and the first segment of the first bending tool, second segment of the first bending tool, third segment of the first bending tool, and fourth segment of the first bending tool each define a discrete portion of the shaping surface.

Preferably the fourth segment of the first bending tool does not move toward the third segment of the first bending tool.

Preferably the fourth portion of the glass sheet is a leading edge portion of the glass sheet and the leading edge portion of the glass sheet is contacted by a stopper to regulate the position of the glass sheet relative to the shaping surface of the first bending tool and after contact with the leading edge portion of the glass sheet the stopper moves away from the leading edge portion of the glass sheet. Preferably the stopper moves away from the leading edge portion of the glass sheet vertically in a downward direction or in a direction of glass travel.

In some embodiments the first portion of the glass sheet is contacted by a first positioning assembly, the first positioning assembly moving with the first segment and in a direction which is toward the glass sheet prior to contacting the first portion of the glass sheet.

Preferably the first positioning assembly comprises a body portion which is configured to move vertically in an upward direction or a downward direction.

Preferably the body portion moves vertically in the downward direction prior to press bending the glass sheet between the first bending tool and a second bending tool.

Preferably the body portion moves vertically in the upward direction after press bending the glass sheet between the first bending tool and a second bending tool.

Preferably the method further comprises contacting an upper surface of the body portion with the second bending tool to move the body portion in the downward direction.

From a second aspect the present invention provides a bending tool for shaping a glass sheet, comprising: a shaping surface for supporting a glass sheet thereon, the shaping surface being at least partially defined by a first segment and a second segment, wherein the first segment is spaced apart from the second segment and the first segment is movable from a first position to a second position in a direction which is toward the second segment; and a first positioning assembly in mechanical communication with the first segment, wherein the first positioning assembly is configured to contact a first portion of the glass sheet to adjust a position of the glass sheet relative to the shaping surface.

Preferably when the first segment is in the first position the glass sheet is deposited on the bending tool and when the first segment is in the second position when the glass sheet is shaped on the first bending tool.

Preferably the shaping surface is configured to support the glass sheet in a peripheral region thereof.

Preferably when the first segment moves from the first position to the second position, the movement of the first segment in the direction toward the second segment is perpendicular to a direction of glass travel or the same as the direction of glass travel.

Preferably the second segment is movable from a first position to a second position and in a direction which is toward the first segment.

Preferably the second segment is movable from a first position to a second position and in a direction which is perpendicular to movement of the first segment in the direction toward the second segment.

Preferably the first portion of the glass sheet is a pillar edge portion, leading edge portion, or trailing edge portion of the glass sheet.

Preferably the bending tool further comprises a third segment which at least partially defines the shaping surface, preferably wherein the third segment is movable in a direction which is the same as a direction of glass travel.

Preferably the bending tool further comprises a third segment which at least partially defines the shaping surface, preferably wherein the third segment is movable in a direction which is perpendicular to the movement of the first segment in the direction toward the second segment.

Preferably a groove is provided in the first segment for receiving a portion of a body portion of the first positioning assembly.

Preferably the first positioning assembly is attached to the first segment and moves with the first segment toward the second segment.

Preferably the bending tool further comprises a second positioning assembly in mechanical communication with the first segment, the second positioning assembly being spaced apart from the first positioning assembly and configured to contact the first portion of the glass sheet to adjust the position of the glass sheet relative to the shaping surface.

Preferably the bending tool further comprises one or more positioning assemblies in mechanical communication with the second segment, the one or more positioning assemblies configured to contact a second portion of the glass sheet to adjust the position of the glass sheet relative to the shaping surface.

Preferably the bending tool further comprises a frame, wherein the glass sheet is in a first position relative to the frame when the first segment is in a first position relative to the frame, and the glass sheet is in a second position relative to the frame and the first portion of the glass sheet is in contact with the first positioning assembly when the the first segment is in a second position relative to the frame.

In some embodiments the second segment is movable from a first position to a second position and in a direction which is toward the first segment and when the second segment moves from the first position to the second position, the movement of the second segment toward the first segment is perpendicular to a direction of glass travel.

In some embodiments the bending tool further comprises a third segment which at least partially defines the shaping surface, wherein the third segment is movable in a direction toward a fourth segment.

Preferably third segment is configured to receive a trailing edge portion of the glass sheet.

Preferably a first end of the third segment is spaced apart from a first end of the first segment and a second end of the third segment is spaced apart from a first end of the second segment.

Preferably the fourth segment is configured to receive a leading edge portion of the glass sheet and is not movable in a direction which is toward the third segment.

In some embodiments the first positioning assembly comprises a body portion, the body portion being movable from a first position to a second position and from the second position to the first portion.

Preferably the body portion is in the first position prior to shaping the glass sheet and in the second position when the glass sheet is shaped.

Preferably a portion of the body portion is received by a groove provided in the first segment when in the second position.

Preferably when the body portion is in the first position an upper surface of the body portion is oriented in an oblique manner with respect to the shaping surface.

Preferably a biasing member applies a force to the body portion to move the body portion from the second position to the first position.

In some embodiments the first positioning assembly comprises a body portion, the body portion being disposed over the first segment and configured to move vertically in an upward direction or a downward direction.

Preferably the body portion extends toward an inner edge of the first segment.

Preferably the body portion comprises an end surface which is configured to contact the first portion of the glass sheet.

From a third aspect the present invention also provides a glass shaping line comprising a bending tool according to the second aspect of the present invention.

Preferably the glass shaping line further comprises a second bending tool.

Preferably the glass shaping line is for shaping a glass sheet by sagging under the influence of gravity while the glass sheet is being supported on the bending tool.

Preferably the glass shaping line further comprises a furnace for heating the glass sheet to a temperature suitable for shaping.

Preferably the bending tool is provided as a portion of a bending station and the bending station also comprises a plurality of rollers for conveying the glass sheet to a location above the bending tool and a fluid pad assembly for supporting at least a portion of the glass sheet above the bending tool.

Preferably the glass shaping line further comprises a lehr for cooling the glass sheet after shaping.

Preferably the glass shaping line further comprises a second bending tool and the second bending tool is a full-faced mold.

Preferably the glass shaping line further comprises a furnace for heating the glass sheet to a temperature suitable for shaping 61 and the glass shaping line further comprises rollers for conveying the glass sheet through the furnace.

The present invention also provides from another aspect a method of shaping a glass sheet, comprising: providing a glass sheet; heating the glass sheet to a temperature suitable for shaping; providing a first bending tool, the first bending tool comprising a frame and a first segment movable relative to the frame, the first segment comprising a positioning assembly in mechanical communication therewith; depositing the glass sheet on the first bending tool, the glass sheet being disposed over the first segment of the first bending tool and the glass sheet being in a first position relative to the frame; moving the first segment of the first bending tool from a first position relative to the frame to a second position relative to the frame to cause the positioning assembly to contact a first edge portion of the glass sheet thereby moving the glass sheet to a second position relative to the frame of the first bending tool; and shaping the glass sheet on the first bending tool.

### BRIEF SUMMARY OF THE INVENTION

Embodiments of a method of shaping a glass sheet are provided. In an embodiment, the method comprises providing a glass sheet. The glass sheet is heated to a temperature suitable for shaping. The glass sheet is deposited on a first bending tool. The glass sheet is disposed over a first segment of the first bending tool. The first segment of the first bending tool at least partially defines a shaping surface of the first bending tool. The first segment of the first bending tool is moved from a first position to a second position to cause contact with a first portion of the glass sheet. The contact with the first portion of the glass sheet adjusts a position of the glass sheet relative to the shaping surface of the first bending tool. The glass sheet is shaped on the first bending tool.

Also, embodiments of a bending tool for shaping a glass sheet are provided. In an embodiment, the bending tool comprises a shaping surface for supporting a glass sheet thereon. The shaping surface is at least partially defined by a first segment and a second segment. The first segment is spaced apart from the second segment and the first segment is movable from a first position to a second position in a direction which is toward the second segment. A first positioning assembly is in mechanical communication with the first segment. The first positioning assembly is configured to contact a first portion of the glass sheet to adjust a position of the glass sheet relative to the shaping surface.

### BRIEF DESCRIPTION OF THE SEVERAL VIEWS OF THE DRAWING

The above, as well as other advantages of the present invention will become readily apparent to those skilled in the art from the following detailed description when considered in the light of the accompanying drawings in which:
FIG. 1 is a schematic representation of an embodiment of a glass shaping line in accordance with the invention;
FIG. 2 is a top view of a portion of the glass shaping line of FIG. 1;
FIG. 3 is a perspective view of an embodiment of a bending tool suitable for use in the glass shaping line of FIG. 1;
FIG. 4 is a side view of the bending tool of FIG. 3;
FIG. 5 is a top view of the bending tool of FIG. 3;
FIG. 6 is a top view of a portion of the bending tool of FIG. 3 with other portions of the bending tool of FIG. 3 removed for clarity;
FIG. 7 is a perspective view of a portion of the bending tool of FIG. 3;
FIG. 8 is a perspective view of an embodiment of a positioning assembly;
FIG. 9 is a top view of the positioning assembly of FIG. 8;
FIG. 10 is a top view of a portion of an embodiment of the bending tool and the positioning assembly of FIG. 8;
FIG. 11 is a side view of the positioning assembly of FIG. 8 illustrating movement of the positioning assembly of FIG. 8 from a second position to a first position FIG. 12 is a perspective view of another embodiment of a positioning assembly;
FIG. 13 is a top view of the positioning assembly of FIG. 12;
FIG. 14 is a side view of the positioning assembly of FIG. 12 illustrating movement of the positioning assembly of FIG. 12 from a second position to a first position; and
FIG. 15 is a sectional view of a portion of an embodiment of the bending tool and the positioning assembly of FIG. 8, when the positioning assembly is in the first position, and a second bending tool.

### DETAILED DESCRIPTION OF THE INVENTION

It is to be understood that the invention may assume various alternative orientations and step sequences, except where expressly specified to the contrary. It is also to be understood that the specific methods, devices, apparatuses, and features illustrated in the attached drawings, and described in the following specification are simply exemplary embodiments of the inventive concepts. Hence, specific dimensions, directions, or other physical characteristics relating to the embodiments disclosed are not to be considered as limiting, unless expressly stated otherwise. Also, although they may not be, like elements found in the aforementioned embodiments may be referred to with like identifiers within this section of the application.

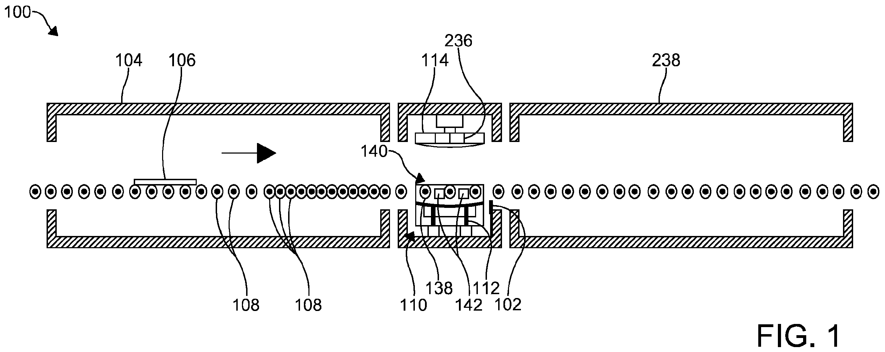

Embodiments of a method of shaping a glass sheet, a glass shaping line, and a bending tool utilized therein are described herein and with reference to FIGs. 1-15.

The glass sheet may be utilized as a portion of a window such as, for example, a windscreen for an automobile. However, the glass sheet may have other automotive applications. For example, the glass sheet may be utilized to form a side window, sunroof, or a rear window. Such a window may be monolithic or laminated. Additionally, the glass sheet may have other vehicle applications. For example, the glass sheet may have applications to on-highway and off-highway vehicles. Also, the glass sheet may have architectural, electronic, industrial, locomotive, naval, aerospace, and other applications.

In certain embodiments, the glass sheet may have a soda-lime-silicate composition. A typical soda-lime-silicate glass composition is (by weight), SiO₂ 69-74%; Al₂O₃ 0-3%; Na₂O 10-16%; K₂O 0-5%; MgO 0-6%; CaO 5-14%; SO₃ 0-2% and Fe₂O₃ 0.005-2%. The glass composition may also contain other additives, for example, refining aids, which would normally be present in an amount of up to 2%. In other embodiments, the glass sheet may be of another composition. For example, the glass sheet may be of a borosilicate composition or an aluminosilicate composition. The glass sheet may have a thickness between 0.5-25 millimetres (mm), typically a thickness between 0.5-8 mm.

The shape of the glass sheet may vary between embodiments. However, in certain embodiments, the glass sheet may have a rectangular outline in plan view. Preferably, the glass sheet has a first major surface and a second major surface. The second major surface opposes the first major surface. Also, the glass sheet may comprise a leading edge portion and a trailing edge portion. As used herein, an edge portion of the glass sheet may refer to a minor surface of the glass sheet that connects the first major surface to the second major surface. The glass sheet may comprise one or more edge portions. Each edge portion of the glass sheet can be flat or curved. Thus, the leading edge portion may refer to the minor surface of the glass sheet that connects the first major surface to the second major surface and is conveyed in a direction of glass travel in advance of the trailing edge portion. In an embodiment, the trailing edge portion is the longest minor surface of the glass sheet that connects the first major surface to the second major surface. In this embodiment, the leading edge portion is of a length which is less than the length of the trailing edge portion. In other embodiments (not depicted), the leading edge portion is the longest minor surface of the glass sheet that connects the first major surface to the second major surface and the trailing edge portion is of a length which is less than the length of the leading edge portion. Additionally, the glass sheet may comprise a first pillar edge portion and a second pillar edge portion. The first pillar edge portion and second pillar edge portion are disposed on opposite sides of the glass sheet. In an embodiment, the first pillar edge portion is a minor surface of the glass sheet that connects the first major surface to the second major surface. In another embodiment, the second pillar edge portion is a minor surface of the glass sheet that connects the first major surface to the second major surface.

FIG. 1 illustrates an embodiment of the glass shaping line 100. In certain embodiments, the glass shaping line 100 is of the press bending variety. In other embodiments (not depicted), the glass shaping line is of the gravity bending variety. Preferably, the glass shaping line 100 includes a preheating furnace 104. The preheating furnace 104 serves to heat one or more glass sheets before bending of the glass sheet occurs. In the preheating furnace 104, a glass sheet 106 is heated to a temperature suitable for shaping. For example, the glass sheet 106 may be heated to a temperature of 590-670 °C. Accordingly, the glass sheet 106 may also be referred to as a heated glass sheet.

The glass sheet 106 is transported through the furnace 104 on rollers 108. The rollers 108 are spaced apart. The spacing of the rollers 108 is reduced near the exit of the preheating furnace 104, since the glass sheet 106 in a heated state is deformable and therefore requires greater support.

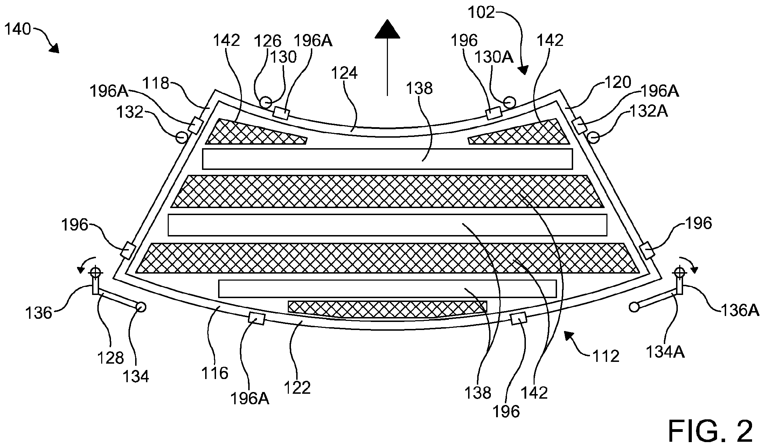

The preheating furnace 104 is followed by a bending station 110. The bending station 110 may include a centering device 102. The centering device 102 may be used to regulate positioning of the glass sheet 106 before it is deposited on the first bending tool 112. As shown in FIG. 2, when provided, the centering device 102 may comprise a plurality of positioners 126, 128. The positioners 126, 128 may be disposed about a peripheral edge of a first bending tool 112 to facilitate positioning of the glass sheet 106 relative to a shaping surface of the first bending tool 112 before the glass sheet 106 has been shaped.

As illustrated best in FIG. 2, a first positioner 126, which may be moved vertically in an upward direction and a downward direction, is configured to adjust the position of the glass sheet 106 relative to the shaping surface 116 of the first bending tool 112 before the glass sheet 106 is deposited on the first bending tool 112. In other embodiments (not depicted), the first positioner 126 is configured to adjust the position of the glass sheet 106 relative to the shaping surface 116 of the first bending tool 112 after the glass sheet 106 is deposited on the first bending tool 112. In an embodiment, the first positioner 126 may include one or more portions 130, 130A that contact the leading edge portion of the glass sheet 106. In another embodiment, the first positioner 126 may include separate portions 132, 132A that contact opposite sides of the glass sheet 106. The one or more portions 130, 130A of the first positioner 126 that contact the leading edge portion of the glass sheet 106 may also act as a stopper, which prevents the glass sheet 106 from moving beyond the first bending tool 112. After the glass sheet 106 is positioned, the portions 130, 130A, 132, 132A of the first positioner 126 contacting the glass sheet 106 may be moved away from the glass sheet 106 so as to not interfere with one or more of the bending tools 112, 114 during bending of the glass sheet 106. The centering device 102 may also comprise a second positioner 128. Preferably, the second positioner 128 is configured to adjust the position of the glass sheet 106 relative to the shaping surface 116 of the first bending tool 112 before the glass sheet 106 is deposited on the first bending tool 112. In another embodiment (not depicted), the second positioner 128 is configured to adjust the position of the glass sheet 106 relative to the shaping surface 116 of the first bending tool 112 after the glass sheet 106 is deposited on the first bending tool 112. In these embodiments, the second positioner 128 may include one or more portions 134, 134A that contact the trailing edge portion of the glass sheet 106 when the sheet is being positioned. The portions 134, 134A of the second positioner 128 contacting the trailing edge portion of the glass sheet 106 may each be attached to a pivot arm 136, 136A. After the glass sheet 106 is located entirely within the bending station 110, the pivot arms 136, 136A may rotate to bring the second positioner 128 into contact with the glass sheet 106. After the glass sheet 106 is positioned, the portions 134, 134A of the second positioner 128 contacting the glass sheet 106 may be rotated away from the glass sheet 106 so as to not interfere with one or more of the bending tools 112, 114 during bending of the glass sheet 106.

Referring back to FIG. 1, a plurality of rollers 138 are provided for conveying the glass sheet 106 to a location above the first bending tool 112. It is preferred that each roller of the plurality of rollers 138 rotates to convey the glass sheet 106 in a direction of glass travel, which is illustrated in FIG. 1 with respect to the glass shaping line 100 and in FIG. 2 with respect to a portion of the first bending tool 112. Also, it is preferred that the plurality of rollers 138 convey the glass sheet 106 at a height or distance above the first bending tool 112 when the first bending tool 112 is in a rest position. It may also be preferred that the height that the plurality of rollers 138 conveys the glass sheet 106 at is substantially constant.

Once the glass sheet 106 exits the preheating furnace 104, the glass sheet 106 is transferred from the rollers 108 in the preheating furnace 104 to the plurality of rollers 138. As illustrated in FIG. 2, in certain embodiments, the plurality of rollers 138 may comprise rollers that are of different lengths. In other embodiments (not depicted), the plurality of rollers may comprises rollers of substantially equal lengths. As illustrated in FIGs. 1 and 2, each roller of the plurality of rollers 138 is spaced apart from an adjacent roller. The spaces provided between the rollers may be equal in size. It is preferred that each roller of the plurality of rollers 138 is movable in that each roller can be moved vertically in a downward direction or in an upward direction.

In certain embodiments, the glass shaping line 100 comprises a fluid pad assembly 140. The fluid pad assembly 140 facilitates positioning the glass sheet 106 on the first bending tool 112 and transferring the glass sheet 106 from the plurality of rollers 138 to the first bending tool 112. The fluid pad assembly 140 comprises one or more fluid pads 142. It is preferred that a plurality of fluid pads 142 are provided. When a plurality of fluid pads 142 are provided, the fluid pads 142 may be configured as an array. The centering device 102, plurality of rollers 138, fluid pad assembly 140, and the fluid pads 142 may operate and be as described in PCT patent application no. PCT/GB2017/053414.

Preferably, when the fluid pad assembly 140 is provided, the fluid pad assembly 140 is activated before the leading edge portion of the glass sheet 106 reaches the one or more portions 130, 130A of the first positioner 126 that act as the stopper. In certain embodiments, the one or more portions 130, 130A of the first positioner 126 may be utilized to regulate the position of the glass sheet 106 relative to the shaping surface 116 of the first bending tool 112. The one or more portions 130, 130A of the first positioner 126 may be vertically movable in the upward direction or downward direction. After contacting and positioning the glass sheet 106 relative to the shaping surface 116 of the first bending tool 112, the one or more portions 130, 130A of the first positioner 126 move away from the leading edge portion of the glass sheet 106 to avoid interference with one or more of the bending tools 112, 114 when the glass sheet is being shaped. In an embodiment, the one or more portions 130, 130A of the first positioner 126 move away from the leading edge portion of the glass sheet 106 vertically in a downward direction. In another embodiment, the one or more portions 130, 130A of the first positioner 126 move away from the glass sheet 106 in a direction of glass travel.

Referring back to FIG. 1, the bending station 110 includes the first bending tool 112 and, in certain embodiments, a second bending tool 114. It can be appreciated that the bending station 110 may comprise more bending tools 112, 114 than those shown in FIG. 1. Also, the bending tools 112, 114 shown in FIG. 1 may be oriented in a position other than the positions shown in FIG. 1.

The second bending tool 114 may be a male tool. In an embodiment, the second bending tool 114 is a full-face mold. In these embodiments, the second bending tool 114 may comprise a convex shaping surface 144. Suitable embodiments of the second bending tool 114 are also described in International Publication No. WO2016/189319 A1.

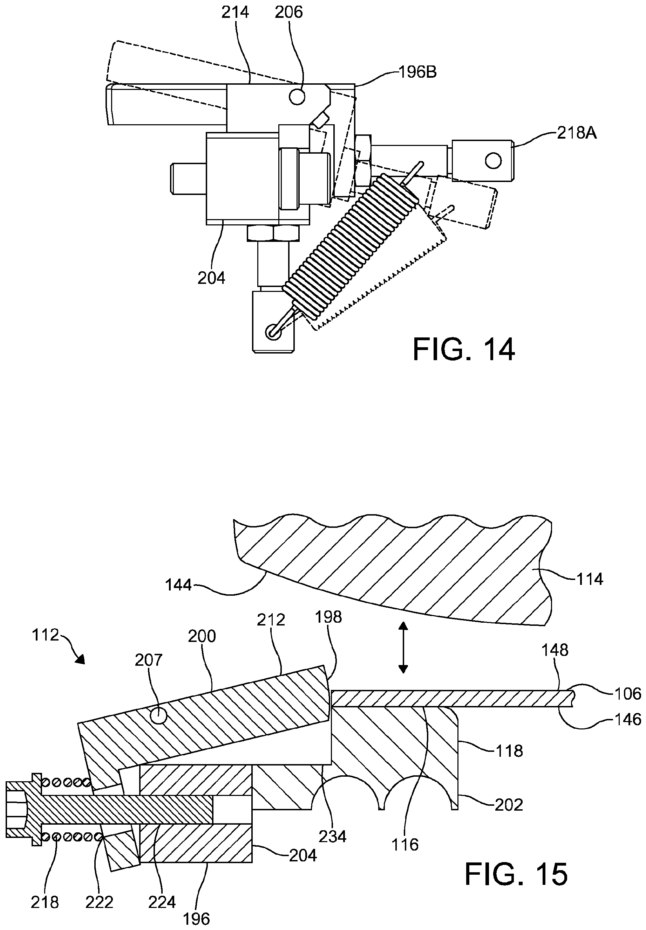

As mentioned above, the glass sheet 106 has a first major surface 146 and a second major surface 148. As illustrated in FIG. 15, after the glass sheet 106 is deposited on the first bending tool 112, the first major surface 146 of the glass sheet 106 faces the shaping surface 116 of the first bending tool 112. When a second bending tool 114 is provided, the second major surface 148 of the glass sheet 106 faces the shaping surface 144 of the second bending tool 114.

The first bending tool 112 may be a female tool. In an embodiment, the first bending tool 112 is a ring-type mold. As illustrated best in FIG. 2, the first bending tool 112 may have a generally rectangular outline or periphery configured to support a glass sheet 106 also having a rectangular outline. The first bending tool 112 comprises a shaping surface 116, in particular a concave shaping surface. As used herein, the shaping surface 116 of the first bending tool 112 refers to the portion of the first bending tool 112 that the glass sheet 106 is deposited on and any position, configuration, or orientation thereof. More particularly, the first bending tool 112 comprises an upper shaping surface 116 for shaping and supporting the glass sheet 106 thereon. After the glass sheet 106 has been received by the first bending tool 112, the glass sheet 106 is supported on the shaping surface. The shaping surface 116 may be configured to support the glass sheet 106 in a peripheral region thereof. The first bending tool 112 may also support a stack of glass sheets thereon, in particular a nested pair separated by a suitable parting agent such as calcium carbonate.

The shaping surface 116 is at least partially defined by a first segment 118. In some embodiments, the shaping surface 116 is at least partially defined by a second segment 120. The first segment 118 is spaced apart from the second segment 120. In the embodiments described and illustrated, the first segment 118 will be described and depicted with reference to a segment of the first bending tool 112 which is configured to receive the first pillar edge portion of the glass sheet 106. However, it should be appreciated that the first segment 118 could refer to a segment of the first bending tool 112 configured to receive the trailing edge portion of the glass sheet 106 or the leading edge portion of the glass sheet 106. Once an edge portion of the glass sheet 106 is received, the first segment 118 is configured to support the edge portion of the glass sheet 106. Additionally, in certain embodiments, the second segment 120 will be described and depicted with reference to a segment of the first bending tool 112 which is configured to receive the second pillar edge portion of the glass sheet 106. However, it should be appreciated that the second segment 120 could refer to a segment of the first bending tool 112 configured to receive the trailing edge portion of the glass sheet 106 or the leading edge portion of the glass sheet 106. Once an edge portion of the glass sheet 106 is received, the second segment 120 is configured to support the edge portion of the glass sheet 106.

Positioned at one end of the first segment 118 and the second segment 120 is a third segment 122. More particularly, a first end of the third segment 122 is spaced apart from a first end of the first segment 118 and a second end of the third segment 122 is spaced apart from a first end of the second segment 120. When provided, the third segment 122 at least partially defines the shaping surface 116 of the first bending tool 112. In certain embodiments, the third segment 122 is configured to receive the trailing edge portion of the glass sheet 106. In these embodiments, once the trailing edge portion of the glass sheet 106 is received, the third segment 122 is configured to support the trailing edge portion of the glass sheet 106.

Positioned at another end of the first segment 118 and the second segment 120 is a fourth segment 124. More particularly, a first end of the fourth segment 124 is spaced apart from a second end of the first segment 118 and a second end of the fourth segment 124 is spaced apart from a second end of the second segment 120. When provided, the fourth segment 124 at least partially defines the shaping surface 116 of the first bending tool 112. In certain embodiments, the fourth segment is configured to receive the leading edge portion of the glass sheet 106. In these embodiments, once the leading edge portion of the glass sheet 106 is received, the fourth segment 124 is configured to support the leading edge portion of the glass sheet 106.

Preferably, when provided, the first segment, second segment, third segment, and fourth segment each define a discrete portion of the shaping surface 116 of the first bending tool 112. When the glass sheet 106 is supported on the shaping surface 116 of the first bending tool 112, the glass sheet 106 is disposed over the first segment 118, second segment 120, third segment 122, and fourth segment 124. The segments 118-124 may define the generally rectangular outline. In certain embodiments, the first segment 118, second segment 120, third segment 122, and fourth segment 124 are configured as a ring which supports the glass sheet 106 in a peripheral region thereof. However, the first bending tool 112 may have other configurations. For example, in an embodiment, the first segment 118 may not be provided in a parallel relationship with the second segment 120. In other embodiments, the third segment 122 may not be provided in a parallel relationship with the fourth segment 124. In still other embodiments, the outline of the first bending tool 112 may be trapezoidal or have other forms suitably configured to support the particular glass sheet to be shaped. Also, as is illustrated in FIG. 2, one or more of the segments 118-124 may comprise one or more curved portions.

One or more of the segments 118-124 are movable. As one or more of the segments 118-124 are movable and the segments 118-124 provided define the shaping surface 116 of the first bending tool 112, in certain embodiments, the shaping surface 116 of the first bending tool 112 also moves in whole or in part. Movement of one or more of the segments 118-124 enables the position of the glass sheet 106 to be adjusted relative to the shaping surface 116 of the first bending tool 112 after the glass sheet 106 has been deposited on the first bending tool 112 and before the glass sheet 106 is shaped. Preferably, two or more of the segments 118-124 are movable. More preferably, three of the segments 118-124 are movable. In this embodiment, the first segment 118, second segment 120, and third segment 122 may be movable and the fourth segment 124 may have a fixed position. However, in other embodiments (not depicted), each of the segments 118-124 is movable.

In an embodiment, the first segment 118 is movable. In this embodiment, it is preferred that the first segment 118 is movable and moves in a direction which is toward the second segment 120. It is also preferred that the first segment 118 is movable and moves in a direction which is away from the second segment 120. In certain embodiments, the direction in which the first segment 118 moves toward the second segment 120 is perpendicular to the direction of glass travel or the same direction as the direction of glass travel. Preferably, the first segment 118 moves from a first position to a second position and from the second position to the first position. It is preferred that when the first segment 118 moves from the first position to the second position or from the second position to the first position that the direction in which the first segment 118 moves is perpendicular to the direction of glass travel. Preferably, the glass sheet 106 is deposited on the first bending tool 112 when the first segment 118 is in the first position. Preferably, when the first segment 118 moves toward the second segment 120, the first segment 118 moves from the first position to the second position. Also, it is preferred that when the first segment 118 moves in a direction which is away from the second segment 120, the first segment 118 moves from the second position to the first position. It is also preferred that the first segment 118 is in the second position when the glass sheet 106 is shaped on the first bending tool 112. In some embodiments, the first segment 118 moves from the first position to the second position or from the second position to the first position in one second or less. In other embodiments, the first segment 118 moves from the first position to the second position or from the second position to the first position in a half-second or less.

Preferably, the second segment 120 is movable. When the second segment 120 is movable, it is preferred that the second segment 120 is movable and moves in a direction which is toward the first segment 118. It is also preferred that the second segment 120 is movable and moves in a direction which is away from the first segment 118. In certain embodiments, the direction in which the second segment 120 moves toward the first segment 118 is perpendicular to the direction of glass travel or the same direction as the direction of glass travel. In other embodiments, the second segment 120 is not movable toward the first segment 118. Preferably, the second segment 120 is movable and moves from a first position to a second position and from the second position to the first position. Preferably, when the second segment 120 moves toward the first segment 118, the second segment 120 moves from the first position to the second position. Also, it is preferred that when the second segment 120 moves in a direction which is away from the first segment 118, the second segment 120 moves from the second position to the first position. Preferably, the glass sheet 106 is deposited on the first bending tool 112 when the second segment 120 is in the first position. It is also preferred that the second segment 120 is in the second position when the glass sheet 106 is shaped on the first bending tool 112. In some embodiments, the second segment 120 moves from the first position to the second position or from the second position to the first position in one second or less. In other embodiments, the second segment 120 moves from the first position to the second position or from the second position to the first position in a half-second or less.

The movement of the first segment 118 and the movement of the second segment 120 may occur in a simultaneous manner. For example, in embodiments where the first segment 118 moves toward the second segment 120 in a direction which is perpendicular to the direction of glass travel and the second segment 120 moves toward the first segment 118 in a direction which is perpendicular to the direction of glass travel, the movement of the first segment 118 and the movement of the second segment 120 may occur at the same time. In some embodiments where the first segment 118 and the second segment 120 move at the same time, the first segment 118 and the second segment 120 may both be moving toward the glass sheet 106 after it has been deposited on the first bending tool 112. In other embodiments, the first segment 118 and the second segment 120 may both be moving away from the glass sheet 106 and/or each other after the glass sheet 106 has been shaped.

In an embodiment, the third segment 122 is movable. In this embodiment, it is preferred that the third segment 122 is movable and moves in a direction which is toward the fourth segment 124. It is also preferred that the third segment 122 is movable and moves in a direction which is away from the fourth segment 124. In certain embodiments, the third segment 122 moves toward the fourth segment 124 in a direction which is perpendicular to the direction of glass travel. However, it is preferred that the third segment 122 moves toward the fourth segment 124 in a direction which is the same as the direction of glass travel. The third segment 122 may also move in relation to other segments. For example, in some embodiments, the third segment 122 moves in a direction which is perpendicular to the direction in which the first segment 118 moves. In these embodiments, the third segment 122 may also move in a direction which is perpendicular to the direction in which the second segment 120 moves. Preferably, the third segment 122 is movable and moves from a first position to a second position and from the second position to the first position. Preferably, when the third segment 122 moves toward the fourth segment 124, the third segment 122 moves from the first position to the second position. Also, it is preferred that when the third segment 122 moves in a direction which is away from the fourth segment 124, the third segment 122 moves from the second position to the first position. Preferably, the glass sheet 106 is deposited on the first bending tool 112 when the third segment 122 is in the first position. It is also preferred that the third segment 122 is in the second position when the glass sheet 106 is shaped on the first bending tool 112. In some embodiments, the third segment 122 moves from the first position to the second position or from the second position to the first position in one second or less. In other embodiments, the third segment 122 moves from the first position to the second position or from the second position to the first position in a half-second or less.

In certain embodiments (not depicted), the fourth segment 124 is movable. In one such embodiment, it is preferred that the fourth segment 124 is movable and moves in a direction which is toward the third segment 122. It is also preferred that the fourth segment 124 is movable and moves in a direction which is away from the third segment 122. Preferably, when the fourth segment 124 moves toward the third segment 122, the fourth segment 124 moves from a first position to a second position. Also, it is preferred that when the fourth segment 124 moves in a direction which is away from the third segment 122, the fourth segment 124 moves from the second position to the first position. When the fourth segment 124 moves toward the third segment 122, it is preferred that the fourth segment 124 moves in a direction which is opposite the direction of glass travel. In some embodiments, the fourth segment 124 moves from the first position to the second position or from the second position to the first position in one second or less. In other embodiments, the fourth segment 124 moves from the first position to the second position or from the second position to the first position in a half-second or less.

In embodiments where the fourth segment 124 moves toward the third segment 122, the movement of the third segment 122 and the movement of the fourth segment 124 may occur in a simultaneous manner. For example, in embodiments where the third segment 122 moves toward the fourth segment 124 in the direction of glass travel and the fourth segment 124 moves toward the third segment 122 in the opposite direction, the movement of the third segment 122 and the movement of the fourth segment 124 may occur at the same time. In some embodiments where the movement of the third segment 122 and the movement of the fourth segment 124 occur at the same time, the third segment 122 and the fourth segment 124 may both be moving toward the glass sheet 106 at the same time after the glass sheet 106 has been deposited on the first bending tool 112. In other embodiments, the third segment 122 and the fourth segment 124 may both be moving away from the glass sheet 106 and/or each other at the same time after the glass sheet 106 has been shaped. In still another embodiment, the movement of the third segment 122 and the movement of the fourth segment 124 may occur in a simultaneous manner with the movement of the first segment 118 and the movement of the second segment 120.

However, in other embodiments, it may be preferred that the fourth segment 124 does not move toward the third segment 122. In these embodiments, the position of the glass sheet 106 may change with respect to the fourth segment 124 prior to shaping. For example, when the fourth segment 124 is configured to receive the leading edge portion of the glass sheet 106 and the third segment 122 moves in a direction toward the fourth segment 124 prior to the glass sheet 106 being shaped, the leading edge portion of the glass sheet 106 may move on the fourth segment 124 in the direction of glass travel from a first position to a second position. In these embodiments, the position of the fourth segment 124 may be fixed.

Preferably, when two or more segments 118-124 move prior to shaping the glass sheet 106, the segments 118-124 move toward the glass sheet 106 in a predetermined order. For example, prior to shaping the glass sheet 106, the first segment 118 and the second segment 120 may move toward each other and the glass sheet 106. In this embodiment, the first segment 118 and the second segment 120 may move toward each other and the glass sheet 106 at the same time as described above. Following movement of the first segment 118 and the second segment 120, the third segment 122 may move toward the fourth segment 124 and the glass sheet 106. However, in other embodiments, the first segment 118, second segment 120, and third segment 122 may move in another predetermined order. For example, in certain embodiments, the first segment 118, second segment 120, and third segment 122 may each move toward the glass sheet 106 at the same time. Alternatively, in other embodiments, the third segment 122 may move toward the fourth segment 124 and the glass sheet 106 before the first segment 118 and second segment 120 move toward each other and the glass sheet 106. In this embodiment, the first segment 118 and the second segment 120 may move toward each other and the glass sheet 106 at the same time. It is preferred that, when two or more segments 118-124 move toward the glass sheet 106 in a predetermined order prior to shaping the glass sheet 106, each segment that moves will have moved from its first position to its second position in a predetermined period of time. It is preferred that the predetermined period of time begins when one or more of the two or more segments 118-124 begin to move and ends when all of the two or more segments 118-124 that move toward the glass sheet 106 in the predetermined order have moved from a first position to a second position. Preferably, the predetermined period of time is two seconds or less.

In some embodiments each segment 118-124 that is movable, moves from its second position to its first position after the glass sheet 106 has been removed from the first bending tool.

In some embodiments each segment 118-124 that is movable may move from its second position to its first position after the glass sheet 106 has been removed from the first bending tool in a simultaneous manner or in another predetermined order.

In some embodiments each segment 118-124 that is movable, moves from its second position to its first position after the glass sheet 106 has been shaped.

In some embodiments each segment 118-124 that is movable may move from its second position to its first position after the glass sheet 106 has been shaped in a simultaneous manner or in another predetermined order.

The vertical position of each segment 118-124 can be regulated utilizing one or more supports 150. The vertical position of a particular segment 118-124 may be regulated to compensate for changes in the segment or another segment caused by the heating and cooling of the first bending tool 112. The one or more supports 150 each have a length that can be modified. As each segment 118-124 has one or more supports 150 attached thereto, modifying the length of at least one of the one or more supports 150 regulates the position of the segment. The position of a segment is regulated in a vertical direction by increasing or decreasing the length of the one or more supports 150 that are attached to the segment.

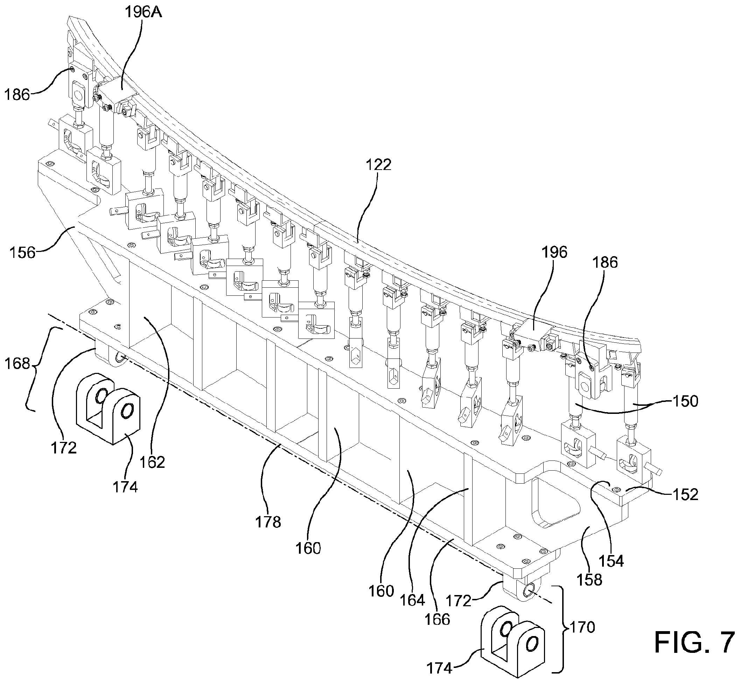

The one or more supports 150 will now be described with reference to the third segment 122, which is illustrated in FIG. 7, and a base member 152. It should be appreciated that the description provided below for the third segment 122, the one or more supports 150, and base member 152 could also apply to the one or more supports 150 attached to each of the first segment 118, second segment 120, and fourth segment 124 and respective base members connected to each of the first segment 118, second segment 120, and fourth segment 124.

Referring now to FIG. 7, each support of the one or more supports 150 is attached to the third segment 122 and, on an opposite end, each support of the one or more supports 150 is attached to the base member 152. The base member 152 may comprise an upper flange 154. On a side, the upper flange 154 is attached to the one or more supports 150. On an opposite side, the upper flange 154 is attached to a first end of a first wall portion 156 and a first end of a second wall portion 158. The upper flange 154 is also attached to one or more vertically extending ribs 160 at an upper end thereof. A rib 162, 164 of the one or more vertically extending ribs 160 may also be attached to each of the first wall portion 156 and the second wall portion 158. The one or more vertically extending ribs 160 may also be attached to a lower flange 166. A second end of the first wall portion 156 and a second end of a second wall portion 158 may also be attached to the lower flange 166.

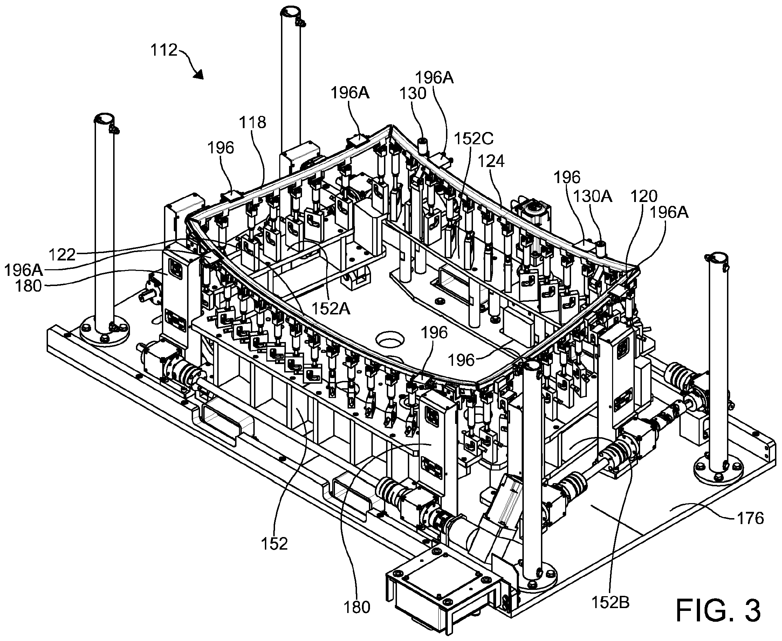

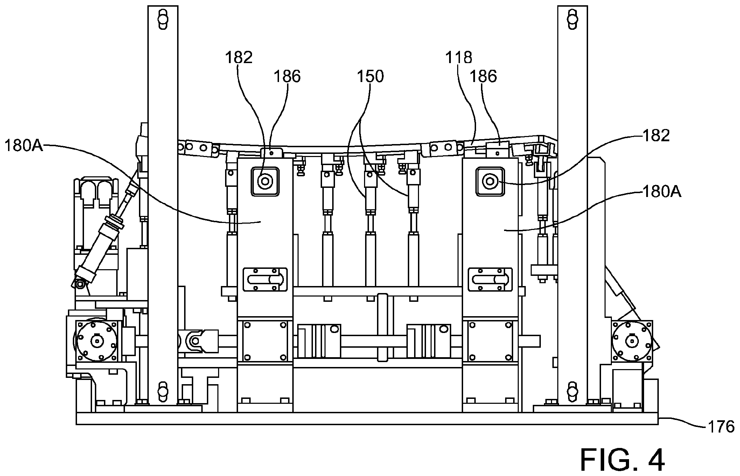

In order to enable movement of a segment, the base member 152 is attached to a pair of hinges 168, 170 via the lower flange 166. The hinges 168, 170 illustrated in FIG. 7 are depicted in an exploded manner with certain portions removed for clarity. It is preferred that each hinge 168, 170 illustrated in FIG. 7 comprises a first member 172, which is attached to the lower flange 166. An opening is provided in the first member 172 for receiving a pin (not depicted). The pin is also disposed through a pair of openings in a second member 174. The first member 172 and the second member 174 are joined by disposing the pin through the openings in each member 172, 174. A bushing (not depicted) may be provided in each of the openings in the second member 172. Preferably, each bushing is disposed around a portion of the pin. In an embodiment, the bushings enable rotation of the pin. In another embodiment, rotation of the pin may be enabled by another type of bearing. The position of the second member 172 is fixed by attaching an end of the second member 172 to a frame 176, which is illustrated in FIGs. 3 and 4.

The frame 176 is a stationary member. Thus, in embodiments where the first bending tool 112 comprises the frame 176, the segments 118-124 which are movable may move relative to the frame 176. For example, in an embodiment, the first segment 118 is movable relative to the frame 176. In this embodiment, the first segment 118 may be in a first position relative to the frame 176 and move from the first position to a second position relative to the frame 176. From the second position relative to the frame 176, the first segment 118 can move back to the first position relative to the frame 176 when desired. When the first bending tool 112 comprises other segments 120-124 that are moveable, the other segments 120-124 that are moveable may be in a first position relative to the frame 176 or a second position relative to the frame 176 and those segments 12-124 may move from the first position relative to the frame 176 to the second position relative or vice versa as described above for the first segment 118. Also, the glass sheet 106 is movable relative to the frame 176. For example, after the glass sheet 106 is deposited on the first bending tool 112 and prior to the glass sheet 106 being shaped, the glass sheet 106 may be in a first position relative to the frame 176 and move from the first position relative to the frame 176 to a second position relative to the frame 176. Preferably, the frame 176 is constructed of a rigid material. In an embodiment, the frame 176 is a platform.

The base member 152 is movable about an axis of rotation 178. The axis of rotation 178 extends through each pin. The base member 152 is movable in a clockwise and a counter clockwise direction about the axis of rotation 178. Movement of the base member 152 about the axis of rotation 178 enables the third segment 122 to move as described above. For example, in an embodiment, movement of the base member 152 in a clockwise direction moves the third segment 122 from its first position to its second position. In this embodiment, movement of the base member 152 in a counter clockwise direction moves the third segment 122 from its second position to its first position. Preferably, as is illustrated, the third segment 122 is provided above the axis of rotation 178. In these embodiments, the axis of rotation 178 is provided in a generally parallel relationship with the third segment 122.

When one or more of the other segments 118, 120, 124 move as described above, it is preferred that each of the respective base members connected to a segment 118, 120, 124 that moves and each of the segments 118, 120, 124 connected thereto move in a manner similar to the one described above for the third segment 122 and the base member 152. When a base member 152A, 152B moves the first segment 118 and/or second segment 120 from its first position to its second position and vice versa, it is preferred that each base member 152A, 152B has an axis of rotation which is provided in a perpendicular relationship with the axis of rotation 178 described above. However, in embodiments where a segment is not movable such as, for example, when the fourth segment 124 has a fixed position, it is preferred that the first bending tool 112 comprises a base member 152C that is configured such that it does not move about an axis of rotation. In these embodiments, the base member 152C, which is illustrated in FIG. 3, may be attached to the frame 176 in a manner that prevents it from moving about an axis of rotation. Preferably, in these embodiments, the base member 152C configured to not move about an axis of rotation is of a conventional configuration known in the art.

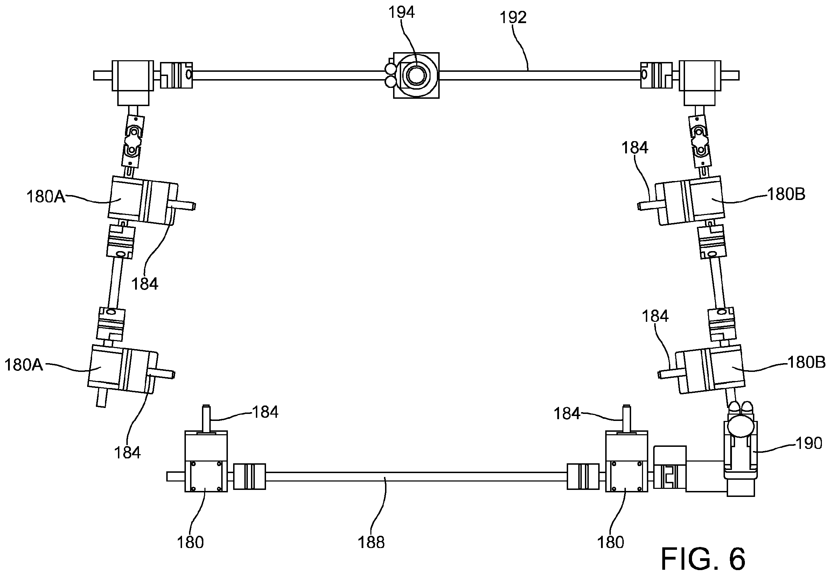

Movement of the base member 152 about the axis of rotation 178 can be achieved utilizing one or more drive assemblies 180. For example, a pair of drive assemblies 180 may be provided to move the base member 152 about the axis of rotation 178. Referring now to FIGs. 3-6, each drive assembly 180 may comprise a drive 182. Each drive 182 may comprise a belt, chain, or another drive member which actuates a driven member 184, which are illustrated best in FIG. 6. Each driven member may be a screw, rod, or another member having a threaded end. Each driven member 184 is actuated in a direction which is toward or away from the desired direction of movement. In an embodiment, on an end, each driven member 184 is attached to a connector 186 that receives the driven member 184. The connector 186 and the driven member 184 may be attached to each other via a threaded connection. In an embodiment, each connector 186 is similarly configured. In the embodiments illustrated, each connector 186 is a clevis or a similar member. One or more of the connectors 186 may be attached to a portion of the base member 152. Alternatively, one or more of the connectors 186 may be attached to a segment 118-124, at least one support of the one or more supports 150, or another portion of the first bending tool 112.

Preferably, when a pair of drive assemblies 180 are provided to move the base member 152 about the axis of rotation 178, the drive assemblies 180 are connected to each other via a first transfer shaft assembly 188. The first transfer shaft assembly 188 may comprise a single shaft or two or more shafts. The first transfer shaft assembly 188 receives torque from a first motor 190 connected to the first transfer shaft assembly 188. The torque received by the first transfer shaft assembly 188 is communicated to the pair of drive assemblies 180 connected to the first transfer shaft assembly 188. The torque received by the pair of drive assemblies 180 is utilized to power each drive 182.

Similarly, when one or more additional base members are provided to move one or more of the other segments 118, 120, 124 in a manner similar to the one described above, it is preferred that the one or more additional base members move about an axis of rotation as described above. In some of these embodiments, the movement of the one or more additional base members can be achieved utilizing one or more additional drive assemblies 180A, 180B. It is preferred that the one or more additional drive assemblies 180A, 180B are configured in the same manner as the one or more drive assemblies 180 described above. In an embodiment, the one or more additional drive assemblies 180A, 180B comprise a first pair of drive assemblies 180A and the second pair of drive assemblies 180B. In this embodiment, the first pair of drive assemblies 180A and the second pair of drive assemblies 180B are connected to each other via a second transfer shaft assembly 192. The second transfer shaft assembly 192 may comprise a single shaft or two or more shafts. Connecting the first pair of drive assemblies 180A and the second pair of drive assemblies 180B to each other via the second transfer shaft assembly 192 enables, for example, the base member 152A connected to the first segment 118 and the base member 152B connected to the second segment 120 to move about respective axes of rotation in a simultaneous manner. Enabling the base members 152A, 152B to move in a simultaneous manner, allows the first segment 118 and the second segment 120 to move at the same time as described above.

The second transfer shaft assembly 192 receives torque from a second motor 194 connected to the second transfer shaft assembly 192. The torque received by the second transfer shaft assembly 192 is communicated to the first pair of drive assemblies 180A and the second pair of drive assemblies 180B connected to the second transfer shaft assembly 192. The torque received by the first pair of drive assemblies 180A and the second pair of drive assemblies 180B is utilized to power each respective drive 182 as described above.

The first motor 190 and the second motor 194 may be regulated by one or more controllers (not depicted). The one or more controllers regulate the first motor 190 and the second motor 194 by providing signals which direct power to the first motor 190 and the second motor 194. In an embodiment, power may be directed to the first motor 190 prior to directing power to the second motor 194. In other embodiments, power may be directed to the first motor 190 after directing power to the second motor 194.

When it is desired to move the first segment 118 from its first position to its second position and the second segment 120 from its first position to its second position, power may be directed to the second motor 194. When it is desired to move the third segment 122 from its first position to its second position, power may be directed to the first motor 190. Thus, when it is desired to move the first segment 118 from its first position to its second position and the second segment 120 from its first position to its second position at the same time and prior to moving the third segment 122 from its first position to its second position, power is directed to the first motor 190 after directing power to the second motor 194.

The one or more controllers may be in communication with and provide signals to other portions of the first bending tool 112. Additionally, the one or more controllers may be in communication with and provide signals to the plurality of rollers 138 and the fluid pad assembly 140. The signals provided by the one or more controllers to the first bending tool 112 and a drive mechanism (not depicted) may direct movement of the first bending tool 112, plurality or rollers 138, and/or fluid pad assembly 140 vertically in a downward direction or in an upward direction. It should also be appreciated that, in certain embodiments, the one or more controllers are in communication with and provide a signal to the second bending tool 114 to direct movement of the second bending tool 114 vertically in a downward direction or in an upward direction. The one or more controllers may also be in communication with and provide signals to the centering device 102 to regulate positioning of the glass sheet 106 prior to the glass sheet 106 being deposited on the first bending tool 112.

In certain embodiments, the one or more controllers may operate and/or provide the signals described above under the control of a set of programming instructions, which may also be referred to as software. The one or more controllers may include a memory (not depicted) in which programming instructions are stored. In an embodiment, the set of programming instructions enables the one or more controllers to regulate a flow of fluid, positioning of the glass sheet 106 relative to the shaping surface 116, and/or movement of the bending tools 112, 114, plurality of rollers 138, and fluid pad assembly 140 in a predetermined sequence.

The one or more controllers may also receive signals. For example, the one or more controllers may be in communication with an optical sensor (not depicted) which indicates the location of the glass sheet 106 in the glass shaping line 100. In other embodiments, the one or more controllers may receive a signal from the centering device 102, second bending tool 114, one or more valves, and/or a drive mechanism connected to the plurality of rollers 138 and fluid pad assembly 140.

After the glass sheet 106 has been deposited on the first bending tool 112 and prior to being shaped, the position of the glass sheet 106 may be adjusted relative to the shaping surface 116 of the first bending tool 112. To adjust the position of the glass sheet 106 relative to the shaping surface 116 of the first bending tool 112, at least one of the segments 118-124 moves as described above from its first position to its second position to cause contact between one or more portions of the glass sheet 106 and one or more positioning assemblies 196, 196A, 196B. In an embodiment, the first segment 118 moves from its first position to its second position to cause contact between the first portion of the glass sheet 106 and the one or more positioning assemblies 196, 196A, 196B. In this embodiment, the first portion of the glass sheet 106 may be the first pillar edge portion of the glass sheet 106. However, in other embodiments, the first portion of the glass sheet 106 is the second pillar edge portion of the glass sheet 106. In still other embodiments, the first portion of the glass sheet 106 may be the leading edge portion or the trailing edge portion of the glass sheet 106. Preferably, a second portion of the glass sheet 106 is contacted by one or more positioning assemblies 196, 196A, 196B to adjust the position of the glass sheet 106 relative to the shaping surface 116 of the first bending tool 112. In an embodiment, the second segment 120 moves from its first position to its second position to cause contact between the second portion of the glass sheet 106 and the one or more positioning assemblies 196, 196A, 196B. In this embodiment, the second portion of the glass sheet 106 may be the second pillar edge portion of the glass sheet. However, in other embodiments, the second portion of the glass sheet may be the first pillar edge portion of the glass sheet. In still other embodiments, the second portion of the glass sheet 106 may be the leading edge portion or the trailing edge portion of the glass sheet 106. In still other embodiments, a third portion of the glass sheet 106 is contacted by one or more positioning assemblies 196, 196A, 196B to adjust the position of the glass sheet 106 relative to the shaping surface 116 of the first bending tool 112. In some embodiments, the third segment 122 moves from its first position to its second position to cause contact between the third portion of the glass sheet 106 and the one or more positioning assemblies 196, 196A, 196B. In one such embodiment, the third portion of the glass sheet 106 is the trailing edge portion of the glass sheet 106. However, another embodiment, the third portion of the glass sheet 106 is the leading edge portion of the glass sheet 106. In other embodiments, the third portion of the glass sheet 106 may be the first pillar edge portion or the second pillar edge portion of the glass sheet 106. It may also be preferred that a fourth portion of the glass sheet 106 is contacted by one or more positioning assemblies 196, 196A, 196B to adjust the position of the glass sheet 106 relative to the shaping surface 116 of the first bending tool 112. In some embodiments, the fourth segment 124 moves from its first position to its second position to cause contact between the fourth portion of the glass sheet 106 and the one or more positioning assemblies 196, 196A, 196B. In one such embodiment, the fourth portion of the glass sheet 106 is the leading edge portion of the glass sheet 106. However, another embodiment, the fourth portion of the glass sheet 106 is the trailing edge portion of the glass sheet 106. In other embodiments, the fourth portion of the glass sheet 106 may be the first pillar edge portion or the second pillar edge portion of the glass sheet 106.

Contacting one or more portions of the glass sheet 106 with the one or more positioning assemblies 196, 196A, 196B adjusts the position of the glass sheet 106, if necessary, to a desired position on the shaping surface 116 of the first bending tool 112. In order to cause contact between one or more portions of the glass sheet 106 and the one or more positioning assemblies 196, 196A, 196B, it is preferred that the one or more positioning assemblies 196, 196A, 196B are disposed adjacent a periphery of the shaping surface 116 of the first bending tool 112. Each of the one or more positioning assemblies 196, 196A, 196B are configured to contact a portion of the glass sheet 106 to adjust the position of the glass sheet 106 relative to the shaping surface 116 of the first bending tool 112. Preferably, the one or more positioning assemblies 196, 196A, 196B are each similarly configured. However, the method can be practiced utilizing and the first bending tool 112 can be configured when one or more of the one or more positioning assemblies 196, 196A, 196B are not similarly configured.

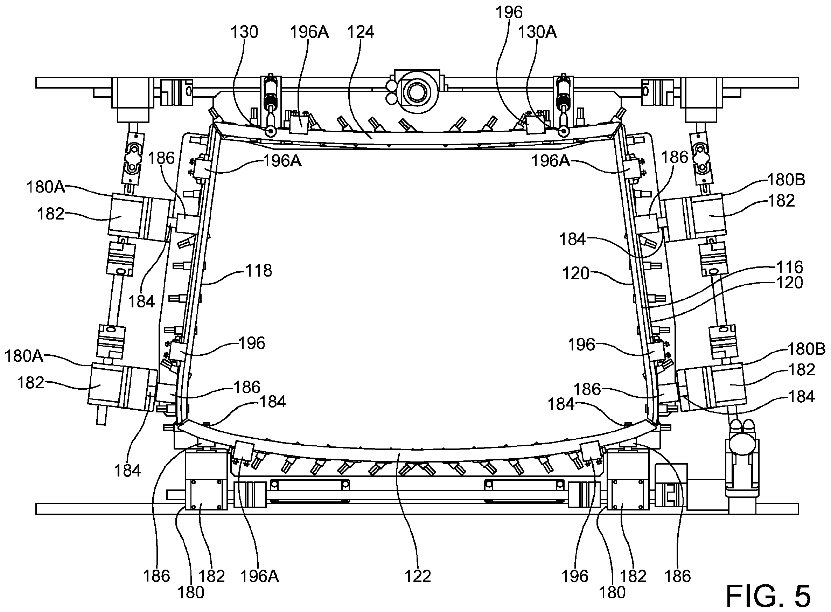

It is preferred that each positioning assembly 196, 196A, 196B is in mechanical communication with a segment 118-124 and that each segment 118-124 has one or more positioning assemblies 196, 196A, 196B in mechanical communication therewith. For example, as illustrated, the first segment 118, second segment 120, third segment 122, and fourth segment 124 may each have one or more positioning assemblies 196, 196A in mechanical communication therewith. The one or more positioning assemblies 196, 196A, 196B in mechanical communication with a segment that moves, such as, for example, the first segment 118, move with the segment and, prior to contacting a portion of the glass sheet 106, in a direction which is toward the glass sheet 106. The positioning assemblies 196, 196A, 196B in mechanical communication with a segment that does not move, do not move in a direction which is toward the glass sheet 106 prior to contacting a portion of the glass sheet 106. For example, in an embodiment like the one illustrated best in FIG. 5, two positioning assemblies 196, 196A are in mechanical communication with the fourth segment 124. In this embodiment, the fourth segment 124 has a fixed position in that it does not move in a direction which is toward the third segment 122. Also, in this embodiment, the fourth segment 124 does not move in a direction which is toward the glass sheet 106 after the glass sheet 106 has been deposited on the shaping surface 116 of the first bending tool 112. Thus, in this embodiment, the two positioning assemblies 196, 196A in mechanical communication with the fourth segment 124 do not move in a direction which is toward the glass sheet 106 prior to contacting the fourth portion of the glass sheet 106.

The features of the one or more positioning assemblies 196, 196A, 196B will now be described below. The one or more positioning assemblies 196, 196A, 196B may be described below with reference to the first segment 118. It should be appreciated that the embodiments of the one or more positioning assemblies 196, 196A, 196B described below could be utilized with any of the segments 118-124 described above.

As illustrated in FIGs. 2 and 3, the one or more positioning assemblies 196, 196A, 196B in mechanical communication with the first segment 118 comprise a first positioning assembly 196. The first positioning assembly 196 is configured to contact a first portion of the glass sheet 106 to adjust the position of the glass sheet 106 relative to the shaping surface 116 of the first bending tool 112. In some embodiments, the first positioning assembly 196 is in mechanical communication with the first segment 118 such that the first positioning assembly 196 is attached to the first segment 118. The one or more positioning assemblies 196, 196A, 196B in mechanical communication with the first segment 118 may also comprise a second positioning assembly 196A. Similar to the first positioning assembly 196, the second positioning assembly 196A is configured to contact the first portion of the glass sheet 106 to adjust the position of the glass sheet 106 relative to the shaping surface 116 of the first bending tool 112. In some embodiments, the second positioning assembly 196A is in mechanical communication with the first segment 118 such that the second positioning assembly 196A is attached to the first segment 118. It is preferred that the first positioning assembly 196 and the second positioning assembly 196A are similarly configured.

In certain embodiments, the first positioning assembly 196 moves with the first segment 118. In some of these embodiments, prior to contacting the glass sheet 106, the first positioning assembly 196 moves with the first segment 118 in a direction toward the glass sheet 106. In one such embodiment, the first positioning assembly 196 moves with the first segment 118 in a direction toward the glass sheet 106 to contact the first portion of the glass sheet 106. In embodiments where the second positioning assembly 196A is provided, the first positioning assembly 196 and the second positioning assembly 196A are spaced apart from each other. Also, movement of the second positioning assembly 196A is as described above for the first positioning assembly 196 and the second positioning assembly 196A contacts the first portion of the glass sheet 106 in a manner similar to the one described above for the first positioning assembly 196. After the glass sheet 106 is shaped, the first positioning assembly 196 and, when provided, the second positioning assembly 196A move with the first segment 118 in an opposite direction.

As described above, the first segment 118 moves from a first position to a second position. In an embodiment and after the first segment 118 moves from the first position, the first positioning assembly 196 contacts the first portion of the glass sheet 106. Preferably, the first portion is an edge portion of the glass sheet 106. The first positioning assembly 196 and, when provided, the second positioning assembly 196A may contact the first portion of the glass sheet 106 before the first segment 118 is in its second position. When the first segment 118 is in the second position and the first portion of the glass sheet 106 is the first pillar edge portion, the first pillar edge portion of the glass sheet 106 abuts an end surface 198 of the first positioning assembly 196 as is illustrated in FIG. 15. It should be appreciated that depending on the size and alignment of the glass sheet 106, prior to movement of the first segment 118, a space (not depicted) may be provided between the end surface 198 of the first positioning assembly 196 and the glass sheet 106 after the glass sheet 106 is deposited on the first bending tool 112. The end surface 198 of the first positioning assembly 196 is configured to contact the first pillar edge portion of the glass sheet 106 to adjust the position of the glass sheet 106 relative to the shaping surface 116 of the first bending tool 112. Contact between the first positioning assembly 196 and the first pillar edge portion of the glass sheet 106 may move the glass sheet 106 from a first position to a second position.

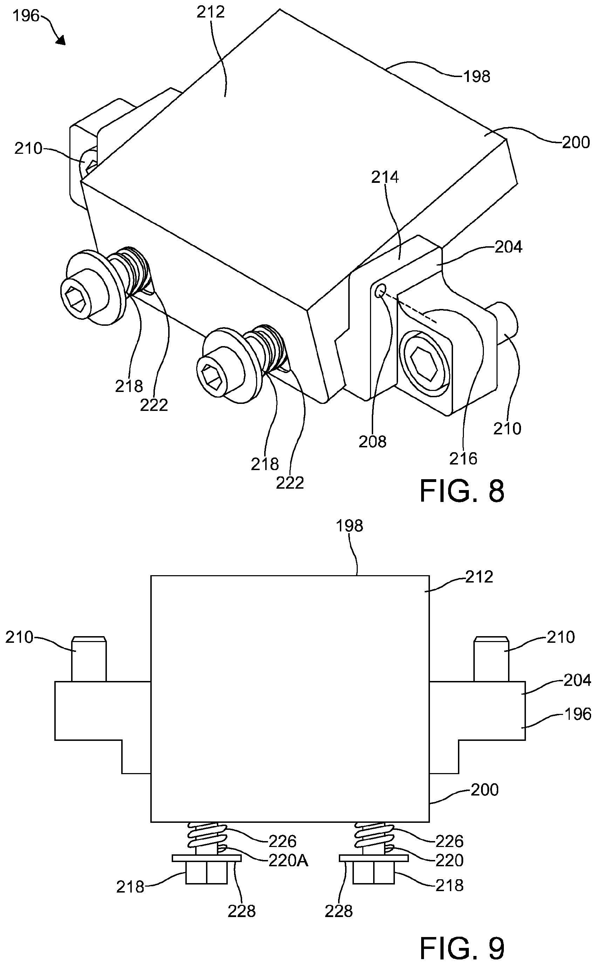

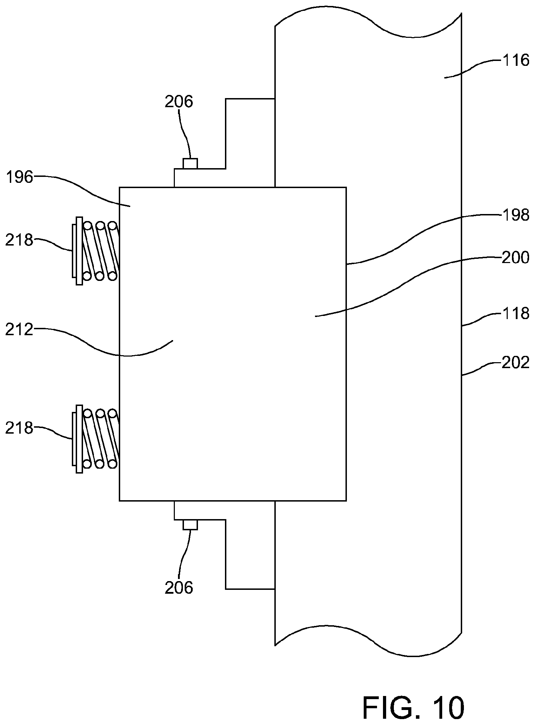

As described above, the end surface 198 of the first positioning assembly 196 may contact the first pillar edge portion of the glass sheet 106 when the position of the glass sheet 106 is being adjusted relative to the shaping surface 116 of the first bending tool 112. Referring now to FIGs. 8-11, the end surface 198 of the first positioning assembly 196 is provided at an end of a body portion 200. The body portion 200 is of a rigid, durable design and may be formed from steel. In an embodiment, the body portion 200 may be L-shaped in cross-section. As illustrated in FIG. 10, a portion of the body portion 200 and the end surface 198 are located over the first segment 118. The body portion 200 extends toward an inner edge 202 of the first segment 118.

A contact material (not depicted) may be attached to the body portion 200. When provided, it is preferred that the contact material covers the end surface 198 of the first positioning assembly 196. The contact material can be attached to the body portion 200 by one or more fasteners, welding, an adhesive, or by another method. Preferably, the contact material is coupled to a side of the body portion 200. When contact material is provided, it is preferred that the contact material separates the portion of the glass sheet 106 being contacted to adjust the position of the glass sheet 106 relative to the shaping surface 116 of first bending tool 112. In an embodiment, the contact material is formed from stainless steel wire woven cloth. However, the contact material may be formed from other cloth-like materials that are softer than the glass sheet 106 and suitable for high temperature applications.

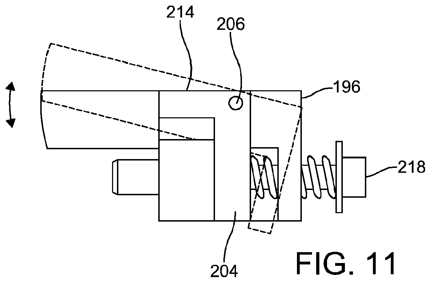

A support member 204 receives a portion of the body portion 200. The body portion 200 is attached to the support member 204 via one or more pins 206, which are illustrated in FIG. 10, or another member. Each of the one or more pins 206 are disposed an opening 207, an example of which is illustrated in FIG. 15, in the body portion 200 and a corresponding opening 208 in the support member 204, an example of which is illustrated in FIG. 8. Referring now to FIG. 10, the one or more pins 206 allow the body portion 200 to move vertically in an upward direction or a downward direction and remain attached the support member 204. The movement of the body portion 200 vertically in the upward direction and the downward direction is depicted in FIG. 11. The support member 204 may be attached to the first segment 118 via one or more fasteners 210 and its position relative to the first segment 118 may be fixed.

As noted above, the body portion 200 is configured to move vertically in an upward direction or a downward direction. It is preferred that the body portion 200 moves vertically in the downward direction from a first position to a second position and in the upward direction from the second position to the first position. Prior to shaping the glass sheet 106 or when the first positioning assembly 196 is in a rest state, the body portion 200 is in the first position. When the glass sheet 106 is being shaped, the body portion 200 is in the second position

When the body portion 200 is in the first position, an upper surface 212 of the body portion 200 is oriented in an oblique manner with respect to the shaping surface 116 of the first bending tool 112, which is depicted in FIG. 15. The upper surface 212 of the body portion 200 may also be oriented in an oblique manner with respect to a top surface 214 of the support member 204 and/or a centerline 216, which is illustrated in FIG. 8, of one of the one or more pins 206. However, as depicted in FIG. 11, the orientation of the upper surface 212 of the body portion 200 changes when the body portion 200 is in the second position. For example, when the glass sheet 106 is being shaped, the upper surface 212 of the body portion 200 may be provided in a parallel relationship or a substantially parallel relationship with the top surface 214 of the support member 204.

The first positioning assembly 196 also comprises one or more adjustment assemblies 218. As illustrated in FIGs. 8-10, in an embodiment, the first positioning assembly 196 may comprise a pair of adjustment assemblies 218. In this embodiment, the adjustment assemblies 218 are spaced apart from each other and positioned on opposite sides of the first positioning assembly 196. The one or more adjustment assemblies 218 allow the first positioning assembly 196 to return to a rest state and the body portion 200 to return to its first position after the glass sheet 106 has been shaped.

Each adjustment assembly 218 comprises an adjustment mechanism. In the embodiments illustrated in FIGs. 8-11, the adjustment mechanism comprises one or more of legs. In the embodiments illustrated in FIGs. 8-11, the one or more legs comprise a first leg 220 and a second leg 220A. Each leg 220, 220A of the one or more legs may be a screw member. It should be appreciated that alternative types of members could be utilized as the first leg 220 and second leg 220A. For example, in an embodiment, each leg 220, 220A may be a bolt member or a similar member having a threaded end for connecting each leg 220, 220A to the body portion 200 and/or the support member 204. Preferably, the first leg 220 is laterally spaced apart from the second leg 220A and vice versa. Also, it is preferred that each leg 220, 220A is disposed through an opening 222 in the body portion 200 and an opening 224 in the support member 204. A biasing member 226 is provided around each leg 220, 220A. Each biasing member 226 applies a force to the body portion 200 to maintain the body portion 200 in its first position or return the body portion 200 from the second position to the first position. Each biasing member 226 extends into one of the openings 222 in the body portion 200 to engage a portion of the body portion 200 adjacent the opening into which the biasing member 226 extends. In these embodiments, a washer 228 may be provided between an end of each biasing member 226 and an outer end of each leg 220, 220A. In these embodiments, each biasing member 226 may be a spring. When each biasing member 226 is a spring, the force applied by the biasing members 226 to the body portion 200 to maintain the body portion in the first position is a spring force.

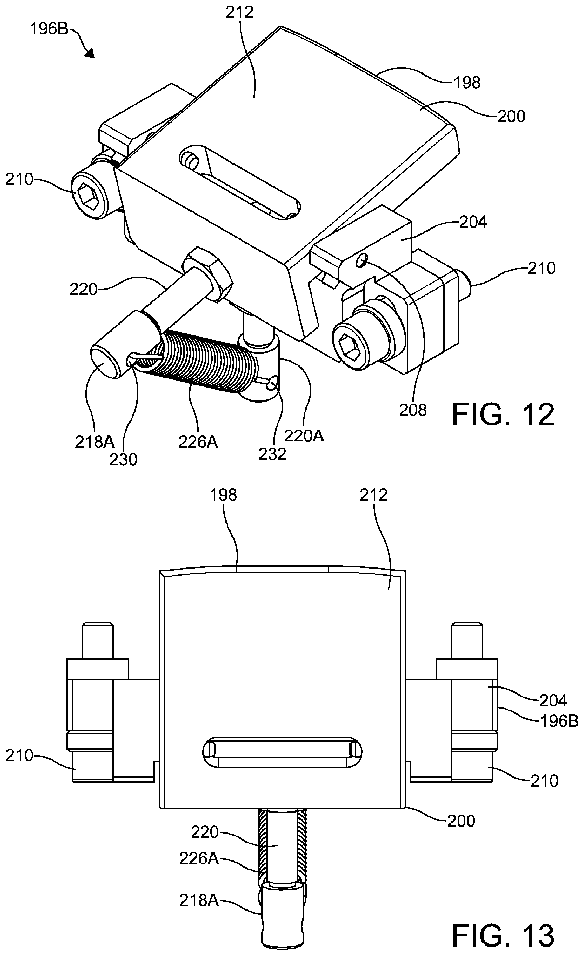

FIGs. 12-14 illustrate another embodiment of the one or more positioning assemblies 196B. In the embodiment illustrated in FIGs. 12-14, the adjustment mechanism 218A comprises a first leg 220 and a second leg 220A. However, in the embodiment illustrated in FIGs. 12-14, the first leg 220 is spaced apart from the second leg 220A in such a manner that the legs 220, 220A are in a perpendicular relationship with each other. Also, in this embodiment, the first leg 220 is attached to the body portion 200 and the second leg 220A is attached to the support member 204. A biasing member 226A is connected to the first leg 220 and the second leg 220A. The biasing member 226A operates in a manner similar to the one described above. However, in the embodiment illustrated in FIGs. 12-14, the biasing member 226A applies a force to the body portion 200 via the first leg 220 to maintain the body portion 200 in the first position or return the body portion 200 to the first position. The biasing member 226A is connected to the first leg 220 and the second leg 220A through an opening 230 in the first leg 220 and an opening 232 in the second leg 220A. In these embodiments, the biasing member 226A may be a spring. When the biasing member 226A is a spring, the force applied by the biasing member 226A to the body portion 200 to maintain the body portion 200 in the first position is a spring force.

Referring now to FIG. 15, the body portion 200 extends toward the inner edge 202 of the first segment 118. Prior to shaping the glass sheet 106, the body portion 200 is in the first position. In the first position, a portion of the end surface 198 and a portion of the upper surface 212 of the body portion 200 is at a height which is greater than the first major surface 146 of the glass sheet 106 after the glass sheet 106 has been deposited on the first bending tool 112. Immediately prior to the glass sheet 106 being shaped, the second bending tool 114 contacts and applies a force to the first positioning assembly 196. More particularly, the second bending tool 114 contacts and applies a force to the upper surface 212 of the body portion 200. The force applied to the upper surface 212 of the body portion 200 by the second bending tool 114 is greater than the force applied to the body portion 200 by the biasing member(s) 226, 226A. Thus, the force applied to the upper surface 212 of the body portion 200 by the second bending tool 114 moves the body portion 200 vertically in a downward direction from the first position to the second position. As the body portion 200 is moves vertically in the downward direction from the first position to a second position, a portion the body portion 200 is received by a groove 234 provided in an outer edge of the first segment 118. The body portion 200 is received by the groove 234 when the body portion 200 is in the second position.

During shaping of the glass sheet 106, the body portion 200 is in the second position. In the second position, the upper surface 212 of the body portion 200 is aligned or substantially aligned with the first major surface 146 of the glass sheet 106. Also, at this time, the end surface 198 may be provided in a parallel or substantially parallel relationship with the first pillar edge portion of the glass sheet 106. After shaping the glass sheet 106, the second bending tool 114 is removed from contact with first positioning assembly 196, which removes the force provided by the second bending tool 114 to the upper surface 212 of the body portion 200. After the second bending tool 114 is removed from contact with the first positioning assembly 196, the force applied by the biasing member(s) 226, 226A returns the body portion 200 to its first position by moving the body portion 200 from the second position to the first position.

In an embodiment, when it is desired to adjust the position of the glass sheet 106 relative to the shaping surface 116 of the first bending tool 112, the first segment 118 is moved from a first position to a second position. Moving the first segment 118 from its first position to its second position causes the first portion of the glass sheet 106 to be contacted one or more positioning assemblies 196, 196A, 196B in mechanical communication with the first segment 118. Contacting the first portion of the glass sheet 106 with the more positioning assemblies 196, 196A, 196B in mechanical communication with the first segment 118 adjusts the position of the glass sheet 106 relative to the shaping surface 116 of the first bending tool 112. In the second position, the one or more positioning assemblies 196, 196A, 196B in mechanical communication with the first segment 118 contact the first portion of the glass sheet 106. In this embodiment, the first portion of the glass sheet 106 may be the first pillar edge portion of the glass sheet 106. Preferably, a second portion of the glass sheet 106 is contacted to adjust the position of the glass sheet 106 relative to the shaping surface 116 of the first bending tool 112. Preferably, the second portion of the glass sheet 106 is an edge portion of the glass sheet 106. To contact the second portion of the glass sheet 106, a second segment 120 may be moved from a first position to a second position. Moving the second segment 120 from its first position to its second position causes the second portion of the glass sheet 106 to be contacted one or more positioning assemblies 196, 196A, 196B in mechanical communication with the second segment 120. Contacting the second portion of the glass sheet 106 with the more positioning assemblies 196, 196A, 196B in mechanical communication with the second segment 120 adjusts the position of the glass sheet relative to the shaping surface 116 of the first bending tool 112. In the second position, the one or more positioning assemblies 196, 196A, 196B in mechanical communication with the second segment 120 contact the second portion of the glass sheet 106. In this embodiment, the second portion of the glass sheet 106 may be the second pillar edge portion of the glass sheet 106. In some embodiments, a third portion of the glass sheet 106 is contacted to adjust the position of the glass sheet 106 relative to the shaping surface 116 of the first bending tool 112. Preferably, the third portion of the glass sheet 106 is an edge portion of the glass sheet 106. To contact the third portion of the glass sheet 106, it is preferred that a third segment 122 is moved from a first position to a second position. Moving the third segment 122 from its first position to its second position causes the third portion of the glass sheet 106 to be contacted one or more positioning assemblies 196, 196A, 196B in mechanical communication with the third segment 122. Contacting the third portion of the glass sheet 106 with the more positioning assemblies 196, 196A, 196B in mechanical communication with the third segment 122 adjusts the position of the glass sheet 106 relative to the shaping surface 116 of the first bending tool 112. In the second position, the one or more positioning assemblies 196, 196A, 196B in mechanical communication with the third segment 122 contact the third portion of the glass sheet 106. In this embodiment, the third portion of the glass sheet 106 may be the trailing edge portion of the glass sheet 106. In further embodiments, a fourth portion of the glass sheet 106 may be contacted to adjust the position of the glass sheet 106 relative to the shaping surface 116 of the first bending tool 112. Preferably, the fourth portion of the glass sheet 106 is an edge portion of the glass sheet 106. To contact the fourth portion of the glass sheet 106, it is preferred that the fourth segment 124 does not move toward the glass sheet 106. Instead, in this embodiment, the glass sheet 106 moves toward the one or more positioning assemblies 196, 196A, 196B in mechanical communication with the fourth segment 124 to cause contact between the fourth portion of the glass sheet 106 and the one or more positioning assemblies 196, 196A, 196B in mechanical communication with the fourth segment 124. Contact between the fourth portion of the glass sheet 106 and the one or more positioning assemblies 196, 196A, 196B in mechanical communication with the fourth segment 124 positions the glass sheet 106 relative to the shaping surface 116 of the first bending tool 112. In this embodiment, the fourth portion of the glass sheet 106 may be the leading edge portion of the glass sheet 106. After the glass sheet 106 has been contacted as described above and is in a desired position relative to the shaping surface 116 of the first bending tool 112 in accordance with one of the embodiments described above, the glass sheet 106 is shaped.

Contacting one or more portions of the glass sheet 106 as described above adjusts the position of the glass sheet 106 relative to the shaping surface 116 of the first bending tool 112. Advantageously, such positioning of the glass sheet 106 relative to the shaping surface 116 of the first bending tool 112 results in improved alignment between the glass sheet 106 and the shaping surface 116 prior to shaping. The improved alignment imparts the glass sheet 106 with the desired properties and ensures the glass sheet 106 is of a high quality after shaping. Furthermore, when the glass shaping line 100 and first bending tool 112 include the fluid pad assembly 140, optical distortion caused by marks on the glass sheet 106 may be reduced when compared with other shaping methods and glass shaping lines.

Referring back to FIG. 1, in embodiments where the glass sheet 106 is shaped via press bending, movement between the first bending tool 112 and the second bending tool occurs to shape the glass sheet 106. In embodiments where the glass sheet 106 is to be press bent, once the glass sheet 106 has been positioned relative to the shaping surface 116 of the first bending tool 112 as described above, it is preferred that the first bending tool 112 moves toward the second bending tool 114, with the second bending tool 114 not moving, to press bend the glass sheet 106. In this embodiment, following movement of the first bending tool 112, the glass sheet 106 is press bent between the first bending tool 112 and the second bending tool 114. However, in other embodiments, the first bending tool 112 may move toward the second bending tool 114 and the second bending tool 114 may move toward the first bending tool 112. Alternatively, the second bending tool 114 may move toward the first bending tool 112, with the first bending tool 112 not moving. In any of these alternatives the objective is to effect relative movement between the first bending tool 112 and the second bending tool 114 to press bend the glass sheet 106 between the first bending tool 112 and the second bending tool 114.

During pressing, a vacuum may be drawn on passages 236 formed in the second bending tool 114 to facilitate forming the glass sheet 106 into a desired shape. Upon completion of shaping the glass sheet 106, the glass sheet 106 may be released from the second bending tool 114 by way of positive pressure being applied through the passages 236 of the second bending tool 114.

Upon completion of the bending process, a conveying device (not shown) serves to transport the shaped glass sheet 106 into a lehr 238. In the lehr 238, the shaped glass sheet 106 may be tempered or annealed as known in the art and cooled to a temperature at which handling can occur. The shaped glass sheet 106 may be used in the construction of a window for a vehicle, such as a windscreen, side window, sunroof or a rear window. Such a window may be monolithic or laminated.

In accordance with the provisions of the patent statutes, the present invention has been described in what is considered to represent its preferred embodiments, however, it should be noted that the invention can be practiced otherwise than as specifically illustrated and described, all as defined in the claims.

## Claims

1. Method of shaping a glass sheet (106), comprising:
providing a glass sheet;
heating the glass sheet to a temperature suitable for shaping;
depositing the glass sheet on a first bending tool (112), the glass sheet being disposed over a first segment (118) of the first bending tool, the first segment at least partially defining a shaping surface (116) of the first bending tool;
moving the first segment of the first bending tool from a first position to a second position to cause contact with a first portion of the glass sheet, the contact with the first portion of the glass sheet adjusting a position of the glass sheet relative to the shaping surface of the first bending tool; and
shaping the glass sheet on the first bending tool.

2. The method of claim 1, wherein the glass sheet is shaped on the first bending tool by press bending the glass sheet between the first bending tool and a second bending tool (114) and/or further comprising supporting the glass sheet on the shaping surface of the first bending tool and/or wherein movement of the first segment of the first bending tool from the first position to the second position is in a direction which is toward a second segment (120) of the first bending tool and/or further comprising moving the first segment from the second position to the first position prior to the glass sheet being disposed over the first segment of the first bending tool.

3. The method of claim 1 or claim 2, further comprising moving a second segment (120) of the first bending tool from a first position to a second position to cause contact with a second portion of the glass sheet, the contact with the second portion of the glass sheet adjusting the position of the glass sheet relative to the shaping surface of the first bending tool, wherein movement of the second segment of the first bending tool from the first position to the second position is in a direction which is toward the first segment

4. The method of any preceding claim, further comprising moving another segment of the first bending tool from a first position to a second position, wherein movement of the another segment of the first bending tool is in a direction which is perpendicular to a direction of movement of the first segment and/or further comprising moving another segment of the first bending tool to cause contact with another portion of the glass sheet, the contact with another portion of the glass sheet adjusting the position of the glass sheet relative to the shaping surface of the first bending tool, wherein movement of the first segment of the first bending tool is in a direction which is perpendicular to a direction of glass travel and movement of the another segment of the first bending tool is in a direction of glass travel and/or further comprising moving another segment of the first bending tool, wherein movement of the another segment of the first bending tool is in a direction which is opposite a direction of glass travel and/or further comprising adjusting the position of the glass sheet relative to the shaping surface of the first bending tool prior to depositing the glass sheet on the first bending tool.

5. The method of any preceding claim, wherein movement of the first segment of the first bending tool from the first position to the second position is in a direction which is perpendicular to a direction of glass travel and/or wherein the first portion of the glass sheet is a first pillar edge portion of the glass sheet and after moving the first segment of the first bending tool from the first position to the second position the first pillar edge of the glass sheet abuts an end surface of a first positioning assembly and/or wherein the first portion of the glass sheet is contacted by a first positioning assembly (196), the first positioning assembly moving with the first segment and in a direction which is toward the glass sheet prior to contacting the first portion of the glass sheet and/or wherein the first portion of the glass sheet is contacted by a first positioning assembly (196) and a second positioning assembly (196A), the first positioning assembly and the second positioning assembly being spaced apart from each other, wherein the first positioning assembly and the second positioning assembly each move with the first segment and in a direction which is toward the glass sheet prior to contacting the glass sheet.

6. The method of claim 1 or claim 2, wherein movement of the first segment of the first bending tool from the first position to the second position is in a direction which is toward a second segment (120) of the first bending tool, further comprising moving the second segment of the first bending tool from a first position to a second position to cause contact with a second portion of the glass sheet, the contact with the second portion of the glass sheet adjusting the position of the glass sheet relative to the shaping surface of the first bending tool, wherein movement of the first segment of the first bending tool and movement of the second segment of the first bending tool is in a direction which is perpendicular to a direction of glass travel, preferably further comprising moving a third segment (122) of the first bending tool from a first position to a second position to cause contact with a third portion of the glass sheet, the contact with the third portion of the glass sheet adjusting the position of the glass sheet relative to the shaping surface of the first bending tool, wherein movement of the third segment of the first bending tool is in a direction which is perpendicular to a direction of movement of the first segment and is toward a fourth segment (124) of the first bending tool.

7. The method of claim 1 or claim 2, further comprising moving a third segment (122) of the first bending tool from a first position to a second position to cause contact with a third portion of the glass sheet, the contact with the third portion of the glass sheet adjusting the position of the glass sheet relative to the shaping surface of the first bending tool, wherein movement of the third segment of the first bending tool is in a direction which is perpendicular to a direction of movement of the first segment and is toward a fourth segment (124) of the first bending tool; wherein movement of the first segment of the first bending tool from the first position to the second position is in a direction which is toward a second segment of the first bending tool, further comprising moving the second segment of the first bending tool from a first position to a second position to cause contact with a second portion of the glass sheet, the contact with the second portion of the glass sheet adjusting the position of the glass sheet relative to the shaping surface of the first bending tool, wherein movement of the first segment of the first bending tool and movement of the second segment of the first bending tool is in a direction which is perpendicular to a direction of glass travel; further comprising disposing the glass sheet over the fourth segment of the first bending tool and causing contact with a fourth portion of the glass sheet to adjust the position of the glass sheet relative to the shaping surface of the first bending tool.

8. The method of claim 7, wherein the first segment, second segment, third segment, and fourth segment are configured as a ring which supports the glass sheet in a peripheral region thereof, and/or wherein the glass sheet is also disposed over the second segment of the first bending tool and the third segment of the first bending tool and the first segment of the first bending tool, second segment of the first bending tool, third segment of the first bending tool, and fourth segment of the first bending tool each define a discrete portion of the shaping surface and/or wherein the fourth segment of the first bending tool does not move toward the third segment of the first bending tool.

9. The method of any preceding claim, wherein the first portion of the glass sheet is an edge portion of the glass sheet.

10. A bending tool (112) for shaping a glass sheet, comprising:
a shaping surface (116) for supporting a glass sheet thereon, the shaping surface being at least partially defined by a first segment (118) and a second segment (120), wherein the first segment is spaced apart from the second segment and the first segment is movable from a first position to a second position in a direction which is toward the second segment; and
a first positioning assembly (196) in mechanical communication with the first segment, wherein the first positioning assembly is configured to contact a first portion of the glass sheet to adjust a position of the glass sheet relative to the shaping surface.

11. The bending tool of claim 10, wherein when the first segment is in the first position the glass sheet is deposited on the bending tool and when the first segment is in the second position when the glass sheet is shaped on the first bending tool and/or wherein the shaping surface is configured to support the glass sheet in a peripheral region thereof and/or wherein when the first segment moves from the first position to the second position, the movement of the first segment in the direction toward the second segment is perpendicular to a direction of glass travel or the same as the direction of glass travel and/or wherein the second segment is movable from a first position to a second position and in a direction which is toward the first segment, preferably wherein when the second segment moves from the first position to the second position, the movement of the second segment toward the first segment is perpendicular to a direction of glass travel and/or wherein the second segment is movable from a first position to a second position and in a direction which is perpendicular to movement of the first segment in the direction toward the second segment and/or wherein the first portion of the glass sheet is a pillar edge portion, leading edge portion, or trailing edge portion of the glass sheet.

12. The bending tool of claim 10 or claim 11, further comprising a third segment (122) which at least partially defines the shaping surface, preferably wherein the third segment is movable in a direction toward a fourth segment (124), preferably wherein the third segment is configured to receive a trailing edge portion of the glass sheet and/or wherein a first end of the third segment is spaced apart from a first end of the first segment and a second end of the third segment is spaced apart from a first end of the second segment and/or wherein the fourth segment is configured to receive a leading edge portion of the glass sheet and is not movable in a direction which is toward the third segment; or further comprising a third segment (122) which at least partially defines the shaping surface, preferably wherein the third segment is movable in a direction which is the same as a direction of glass travel; or further comprising a third segment (122) which at least partially defines the shaping surface, wherein the third segment is movable in a direction which is perpendicular to the movement of the first segment in the direction toward the second segment.

13. The bending tool of any of the claims 10 to 12, further comprising a second positioning assembly (196A) in mechanical communication with the first segment, the second positioning assembly being spaced apart from the first positioning assembly and configured to contact the first portion of the glass sheet to adjust the position of the glass sheet relative to the shaping surface and/or further comprising one or more positioning assemblies in mechanical communication with the second segment, the one or more positioning assemblies configured to contact a second portion of the glass sheet to adjust the position of the glass sheet relative to the shaping surface.

14. The bending tool of any of the claims 10 to 13, further comprising a frame (176), wherein the glass sheet is in a first position relative to the frame when the first segment is in a first position relative to the frame, and the glass sheet is in a second position relative to the frame and the first portion of the glass sheet is in contact with the first positioning assembly when the the first segment is in a second position relative to the frame.

15. A glass shaping line (100) comprising a bending tool according to any of the claims 10 to 14, the glass shaping line preferably comprising a second bending tool (114), in particular a full-faced mold.

## Patentansprüche

1. Verfahren zum Formen einer Glasscheibe (106), umfassend:
Bereitstellen einer Glasscheibe;
Erwärmen der Glasscheibe auf eine zum Formen geeignete Temperatur;
Ablegen der Glasscheibe auf einem ersten Biegewerkzeug (112), wobei die Glasscheibe über einem ersten Segment (118) des ersten Biegewerkzeugs angeordnet wird, wobei das erste Segment zumindest teilweise eine formgebende Oberfläche (116) des ersten Biegewerkzeugs definiert;
Bewegen des ersten Segments des ersten Biegewerkzeugs von einer ersten Position in eine zweite Position, um einen Kontakt mit einem ersten Abschnitt der Glasscheibe zu bewirken, wobei der Kontakt mit dem ersten Abschnitt der Glasscheibe eine Position der Glasscheibe relativ zu der formgebenden Oberfläche des ersten Biegewerkzeugs einstellt; und
Formen der Glasscheibe auf dem ersten Biegewerkzeug.

2. Verfahren nach Anspruch 1, bei dem die Glasscheibe auf dem ersten Biegewerkzeug durch Pressbiegen der Glasscheibe zwischen dem ersten Biegewerkzeug und einem zweiten Biegewerkzeug (114) geformt wird und/oder ferner umfassend das Abstützen der Glasscheibe auf der formgebenden Oberfläche des ersten Biegewerkzeugs und/oder bei dem die Bewegung des ersten Segments des ersten Biegewerkzeugs aus der ersten Position in die zweite Position in einer Richtung erfolgt, die zu einem zweiten Segment (120) des ersten Biegewerkzeugs hin gerichtet ist, und/oder ferner umfassend das Bewegen des ersten Segments aus der zweiten Position in die erste Position, bevor die Glasscheibe über dem ersten Segment des ersten Biegewerkzeugs angeordnet wird.

3. Verfahren nach Anspruch 1 oder Anspruch 2, ferner umfassend Bewegen eines zweiten Segments (120) des ersten Biegewerkzeugs aus einer ersten Position in eine zweite Position, um einen Kontakt mit einem zweiten Abschnitt der Glasscheibe zu bewirken, wobei der Kontakt mit dem zweiten Abschnitt der Glasscheibe die Position der Glasscheibe relativ zur formgebenden Oberfläche des ersten Biegewerkzeugs einstellt, wobei die Bewegung des zweiten Segments des ersten Biegewerkzeugs aus der ersten Position in die zweite Position in einer Richtung erfolgt, die zum ersten Segment des ersten Biegewerkzeugs hin gerichtet ist.

4. Verfahren nach einem der vorstehenden Ansprüche, ferner umfassend das Bewegen eines anderen Segments des ersten Biegewerkzeugs aus einer ersten Position in eine zweite Position, wobei die Bewegung des anderen Segments des ersten Biegewerkzeugs in einer Richtung erfolgt, die senkrecht zu einer Bewegungsrichtung des ersten Segments ist, und/oder ferner umfassend das Bewegen eines anderen Segments des ersten Biegewerkzeugs, um einen Kontakt mit einem anderen Abschnitt der Glasscheibe zu bewirken, wobei der Kontakt mit einem anderen Abschnitt der Glasscheibe die Position der Glasscheibe relativ zur formgebenden Oberfläche des ersten Biegewerkzeugs einstellt, wobei die Bewegung des ersten Segments des ersten Biegewerkzeugs in einer Richtung erfolgt, die senkrecht zu einer Glasbewegungsrichtung ist, und die Bewegung des anderen Segments des ersten Biegewerkzeugs in einer Glasbewegungsrichtung erfolgt und/oder ferner umfassend das Bewegen eines anderen Segments des ersten Biegewerkzeugs, wobei die Bewegung des anderen Segments des ersten Biegewerkzeugs in einer Richtung erfolgt, die entgegengesetzt zu einer Glasbewegungsrichtung ist und/oder ferner umfassend das Einstellen der Position der Glasscheibe relativ zur formgebenden Oberfläche des ersten Biegewerkzeugs vor dem Ablegen der Glasscheibe auf dem ersten Biegewerkzeug.

5. Verfahren nach einem der vorhergehenden Ansprüche, wobei die Bewegung des ersten Segments des ersten Biegewerkzeugs aus der ersten Position in die zweite Position in einer Richtung erfolgt, die senkrecht zu einer Glasbewegungsrichtung ist, und/oder wobei der erste Abschnitt der Glasscheibe ein erster Säulenrandabschnitt der Glasscheibe ist und nach dem Bewegen des ersten Segments des ersten Biegewerkzeugs aus der ersten Position in die zweite Position der erste Säulenrand der Glasscheibe an eine Endfläche einer ersten Positionieranordnung anstößt, und/oder wobei der erste Abschnitt der Glasscheibe von einer ersten Positionieranordnung (196) kontaktiert wird, wobei sich die erste Positionierungsanordnung mit dem ersten Segment und in einer Richtung bewegt, die auf die Glasscheibe zu gerichtet ist, bevor sie den ersten Abschnitt der Glasscheibe berührt und/oder wobei der erste Abschnitt der Glasscheibe durch eine erste Positionieranordnung (196) und eine zweite Positionieranordnung (196A) berührt wird, wobei die erste Positionieranordnung und die zweite Positionieranordnung voneinander beabstandet sind, wobei sich die erste Positionieranordnung und die zweite Positionieranordnung jeweils mit dem ersten Segment und in einer Richtung bewegen, die auf die Glasscheibe zu gerichtet ist, bevor sie die Glasscheibe berühren.

6. Verfahren nach Anspruch 1 oder Anspruch 2, wobei die Bewegung des ersten Segments des ersten Biegewerkzeugs aus der ersten Position in die zweite Position in einer Richtung erfolgt, die auf ein zweites Segment (120) des ersten Biegewerkzeugs zu gerichtet ist, ferner umfassend das Bewegen des zweiten Segments des ersten Biegewerkzeugs aus einer ersten Position in eine zweite Position, um einen Kontakt mit einem zweiten Abschnitt der Glasscheibe zu bewirken, wobei der Kontakt mit dem zweiten Abschnitt der Glasscheibe die Position der Glasscheibe relativ zur formgebenden Oberfläche des ersten Biegewerkzeugs einstellt, wobei die Bewegung des ersten Segments des ersten Biegewerkzeugs und die Bewegung des zweiten Segments des ersten Biegewerkzeugs in einer Richtung erfolgt, die senkrecht zu einer Glasbewegungsrichtung ist, vorzugsweise ferner umfassend das Bewegen eines dritten Segments (122) des ersten Biegewerkzeugs von einer ersten Position zu einer zweiten Position, um einen Kontakt mit einem dritten Abschnitt der Glasscheibe zu bewirken, wobei der Kontakt mit dem dritten Abschnitt der Glasscheibe die Position der Glasscheibe relativ zur formgebenden Oberfläche des ersten Biegewerkzeugs einstellt, wobei die Bewegung des dritten Segments des ersten Biegewerkzeugs in einer Richtung erfolgt, die senkrecht zu einer Bewegungsrichtung des ersten Segments ist und auf ein viertes Segment (124) des ersten Biegewerkzeugs zu gerichtet ist.

7. Verfahren nach Anspruch 1 oder Anspruch 2, ferner umfassend das Bewegen eines dritten Segments (122) des ersten Biegewerkzeugs aus einer ersten Position in eine zweite Position, um einen Kontakt mit einem dritten Abschnitt der Glasscheibe zu bewirken, wobei der Kontakt mit dem dritten Abschnitt der Glasscheibe die Position der Glasscheibe relativ zur formgebenden Oberfläche des ersten Biegewerkzeugs einstellt, wobei die Bewegung des dritten Segments des ersten Biegewerkzeugs in einer Richtung erfolgt, die senkrecht zu einer Bewegungsrichtung des ersten Segments ist und auf ein viertes Segment (124) des ersten Biegewerkzeugs zu gerichtet ist; wobei die Bewegung des ersten Segments des ersten Biegewerkzeugs aus der ersten Position in die zweite Position in einer Richtung erfolgt, die auf ein zweites Segment des ersten Biegewerkzeugs zu gerichtet ist, ferner umfassend das Bewegen des zweiten Segments des ersten Biegewerkzeugs aus einer ersten Position in eine zweite Position, um einen Kontakt mit einem zweiten Abschnitt der Glasscheibe zu bewirken, wobei der Kontakt mit dem zweiten Abschnitt der Glasscheibe die Position der Glasscheibe relativ zur formgebenden Oberfläche des ersten Biegewerkzeugs einstellt, wobei die Bewegung des ersten Segments des ersten Biegewerkzeugs und die Bewegung des zweiten Segments des ersten Biegewerkzeugs in einer Richtung erfolgen, die senkrecht zu einer Glasbewegungsrichtung ist; ferner umfassend das Anordnen der Glasscheibe über dem vierten Segment des ersten Biegewerkzeugs und das Bewirken eines Kontakts mit einem vierten Abschnitt der Glasscheibe, um die Position der Glasscheibe relativ zu der formgebenden Oberfläche des ersten Biegewerkzeugs einzustellen.

8. Verfahren nach Anspruch 7, wobei das erste Segment, das zweite Segment, das dritte Segment und das vierte Segment als ein Ring konfiguriert sind, der die Glasscheibe in einem Randbereich derselben abstützt, und/oder wobei die Glasscheibe auch über dem zweiten Segment des ersten Biegewerkzeugs und dem dritten Segment des ersten Biegewerkzeugs angeordnet ist, wobei das erste Segment des ersten Biegewerkzeugs , das zweite Segment des ersten Biegewerkzeugs, das dritte Segment des ersten Biegewerkzeugs und das vierte Segment des ersten Biegewerkzeugs jeweils einen diskreten Abschnitt der formgebenden Oberfläche definieren und/oder wobei sich das vierte Segment des ersten Biegewerkzeugs nicht auf das dritte Segment des ersten Biegewerkzeugs zu bewegt.

9. Verfahren nach einem der vorstehenden Ansprüche, wobei der erste Abschnitt der Glasscheibe ein Kantenabschnitt der Glasscheibe ist.

10. Biegewerkzeug (112) zum Formen einer Glasscheibe, umfassend:
eine formgebende Oberfläche (116) zum Abstützen einer Glasscheibe darauf, wobei die formgebende Oberfläche zumindest teilweise durch ein erstes Segment (118) und ein zweites Segment (120) definiert ist, wobei das erste Segment von dem zweiten Segment beabstandet ist und das erste Segment aus einer ersten Position in eine zweite Position in einer Richtung auf das zweite Segment zu bewegbar ist; und
eine erste Positionieranordnung (196) in mechanischer Verbindung mit dem ersten Segment, wobei die erste Positionieranordnung konfiguriert ist, um einen ersten Abschnitt der Glasscheibe zu berühren, um eine Position der Glasscheibe relativ zu der formgebenden Oberfläche einzustellen.

11. Biegewerkzeug nach Anspruch 10, wobei, wenn sich das erste Segment in der ersten Position befindet, die Glasscheibe auf dem Biegewerkzeug abgelegt wird, und wenn sich das erste Segment in der zweiten Position befindet, wenn die Glasscheibe auf dem ersten Biegewerkzeug geformt wird und/oder wobei die Formgebungsoberfläche konfiguriert ist, um die Glasscheibe in einem Randbereich derselben zu stützen und/oder wobei, wenn sich das erste Segment von der ersten Position in die zweite Position bewegt, die Bewegung des ersten Segments in Richtung auf das zweite Segment zu senkrecht zu einer Glasbewegungsrichtung oder gleich der Glasbewegungsrichtung ist und/oder wobei das zweite Segment von einer ersten Position zu einer zweiten Position und in einer Richtung auf das erste Segment zu bewegbar ist, vorzugsweise wobei, wenn sich das zweite Segment aus der ersten Position in die zweite Position bewegt, die Bewegung des zweiten Segments in Richtung des ersten Segments senkrecht zu einer Glasbewegungsrichtung verläuft und/oder wobei das zweite Segment aus einer ersten Position in eine zweite Position und in einer Richtung bewegbar ist, die senkrecht zur Bewegung des ersten Segments in Richtung des zweiten Segments verläuft und/oder wobei der erste Abschnitt der Glasscheibe ein Säulenkantenabschnitt, Vorderkantenabschnitt oder Hinterkantenabschnitt der Glasscheibe ist.

12. Biegewerkzeug nach Anspruch 10 oder 11, ferner umfassend ein drittes Segment (122), das zumindest teilweise die Formgebungsoberfläche definiert, wobei das dritte Segment vorzugsweise in einer Richtung auf ein viertes Segment (124) zu bewegbar ist, vorzugsweise wobei das dritte Segment konfiguriert ist, um einen Hinterkantenabschnitt der Glasscheibe aufzunehmen, und/oder wobei ein erstes Ende des dritten Segments von einem ersten Ende des ersten Segments beabstandet ist, und ein zweites Ende des dritten Segments von einem ersten Ende des zweiten Segments beabstandet ist, und/oder wobei das vierte Segment konfiguriert ist, um einen Vorderkantenabschnitt der Glasscheibe aufzunehmen, und nicht in einer Richtung beweglich ist, die auf das dritte Segment zu verläuft; oder ferner umfassend ein drittes Segment (122), das zumindest teilweise die formgebende Oberfläche definiert, wobei das dritte Segment vorzugsweise in einer Richtung bewegbar ist, die die gleiche ist wie eine Glasbewegungsrichtung; oder ferner umfassend ein drittes Segment (122), das zumindest teilweise die formgebende Oberfläche definiert, wobei das dritte Segment in einer Richtung bewegbar ist, die senkrecht zu der Bewegung des ersten Segments in der Richtung auf das zweite Segment zu ist.

13. Biegewerkzeug nach einem der Ansprüche 10 bis 12, ferner umfassend eine zweite Positionieranordnung (196A) in mechanischer Verbindung mit dem ersten Segment, wobei die zweite Positionieranordnung von der ersten Positionieranordnung beabstandet ist und konfiguriert ist, um den ersten Abschnitt der Glasscheibe zu berühren, um die Position der Glasscheibe relativ zur formgebenden Oberfläche einzustellen, und/oder ferner umfassend eine oder mehrere Positionieranordnungen in mechanischer Verbindung mit dem zweiten Segment, wobei die eine oder mehreren Positionieranordnungen konfiguriert sind, um einen zweiten Abschnitt der Glasscheibe zu berühren, um die Position der Glasscheibe relativ zur formgebenden Oberfläche einzustellen.

14. Biegewerkzeug nach einem der Ansprüche 10 bis 13, ferner mit einem Rahmen (176), wobei sich die Glasscheibe in einer ersten Position relativ zum Rahmen befindet, wenn sich das erste Segment in einer ersten Position relativ zum Rahmen befindet, und die Glasscheibe sich in einer zweiten Position relativ zum Rahmen befindet und der erste Abschnitt der Glasscheibe in Kontakt mit der ersten Positionieranordnung ist, wenn sich das erste Segment in einer zweiten Position relativ zum Rahmen befindet.

15. Glasformlinie (100), die ein Biegewerkzeug nach einem der Ansprüche 10 bis 14 umfasst, wobei die Glasformlinie vorzugsweise ein zweites Biegewerkzeug (114), insbesondere eine vollflächige Form, umfasst.

## Revendications

1. Procédé de mise en forme d'une feuille de verre (106), comprenant :
la fourniture d'une feuille de verre ;
le chauffage de la feuille de verre à une température appropriée pour la mise en forme ;
le dépôt de la feuille de verre sur un premier outil de cintrage (112), la feuille de verre étant disposée sur un premier segment (118) du premier outil de cintrage, le premier segment définissant au moins partiellement une surface de mise en forme (116) du premier outil de cintrage ;
le déplacement du premier segment du premier outil de cintrage à partir d'une première position jusqu'à une seconde position pour occasionner la mise en contact avec une première portion de la feuille de verre, la mise en contact avec la première portion de la feuille de verre ajustant une position de la feuille de verre par rapport à la surface de mise en forme du premier outil de cintrage ; et
la mise en forme de la feuille de verre sur le premier outil de cintrage.

2. Procédé selon la revendication 1, dans lequel la feuille de verre est mise en forme sur le premier outil de cintrage par cintrage à la presse de la feuille de verre entre le premier outil de cintrage et un second outil de cintrage (114) et/ou comprenant de plus la mise sur support de la feuille de verre sur la surface de mise en forme du premier outil de cintrage et/ou dans lequel le mouvement du premier segment du premier outil de cintrage à partir de la première position jusqu'à la seconde position se trouve dans une direction qui va vers un second segment (120) du premier outil de cintrage et/ou comprenant de plus le déplacement du premier segment à partir de la seconde position jusqu'à la première position avant que la feuille de verre soit disposée sur le premier segment du premier outil de cintrage.

3. Procédé selon la revendication 1 ou la revendication 2, comprenant de plus le déplacement d'un second segment (120) du premier outil de cintrage à partir d'une première position jusqu'à une seconde position pour occasionner la mise en contact avec une seconde portion de la feuille de verre, la mise en contact avec la seconde portion de la feuille de verre ajustant la position de la feuille de verre par rapport à la surface de mise en forme du premier outil de cintrage, dans lequel le mouvement du second segment du premier outil de cintrage à partir de la première position jusqu'à la seconde position se trouve dans une direction qui va vers le premier segment du premier outil de cintrage.

4. Procédé selon la revendication précédente, comprenant de plus le déplacement d'un autre segment du premier outil de cintrage à partir d'une première position jusqu'à une seconde position, dans lequel le mouvement de l'autre segment du premier outil de cintrage se trouve dans une direction qui est perpendiculaire à une direction de mouvement du premier segment et/ou comprenant de plus le mouvement d'un autre segment du premier outil de cintrage pour occasionner la mise en contact avec une autre portion de la feuille de verre, la mise en contact avec une autre portion de la feuille de verre ajustant la position de la feuille de verre par rapport à la surface de mise en forme du premier outil de cintrage, dans lequel le mouvement du premier segment du premier outil de cintrage se trouve dans une direction qui est perpendiculaire à une direction de parcours du verre et le mouvement de l'autre segment du premier outil de cintrage se trouve dans une direction de parcours du verre et/ou comprenant de plus le mouvement d'un autre segment du premier outil de cintrage, dans lequel le mouvement de l'autre segment du premier outil de cintrage se trouve dans une direction qui est opposée à une direction de parcours du verre et/ou comprenant de plus l'ajustement de la position de la feuille de verre par rapport à la surface de mise en forme du premier outil de cintrage avant le dépôt de la feuille de verre sur le premier outil de cintrage.

5. Procédé selon l'une quelconque des revendications précédentes, dans lequel le mouvement du premier segment du premier outil de cintrage à partir de la première position jusqu'à la seconde position se trouve dans une direction qui est perpendiculaire à une direction de parcours du verre et/ou dans lequel la première portion de la feuille de verre est une première portion de bord de colonne de la feuille de verre et après le déplacement du premier segment du premier outil de cintrage à partir de la première position jusqu'à la seconde position le premier bord de colonne de la feuille de verre bute sur une surface d'extrémité d'un premier assemblage de positionnement et/ou dans lequel la première portion de la feuille de verre est mise en contact par un premier assemblage de positionnement (196), le premier assemblage de positionnement se déplaçant avec le premier segment et dans une direction qui va vers la feuille de verre avant la mise en contact de la première portion de la feuille de verre et/ou dans lequel la première portion de la feuille de verre est mise en contact par un premier assemblage de positionnement (196) et un second assemblage de positionnement (196A), le premier assemblage de positionnement et le second assemblage de positionnement étant espacés l'un de l'autre, dans lequel le premier assemblage de positionnement et le second assemblage de positionnement se déplacent chacun avec le premier segment et dans une direction qui va vers la feuille de verre avant d'être mis en contact avec la feuille de verre.

6. Procédé selon la revendication 1 ou la revendication 2, dans lequel le mouvement du premier segment du premier outil de cintrage à partir de la première position jusqu'à la seconde position se trouve dans une direction qui va vers un second segment (120) du premier outil de cintrage, comprenant de plus le déplacement du second segment du premier outil de cintrage à partir d'une première position jusqu'à une seconde position pour occasionner la mise en contact avec une seconde portion de la feuille de verre, la mise en contact avec la seconde portion de la feuille de verre ajustant la position de la feuille de verre par rapport à la surface de mise en forme du premier outil de cintrage, dans lequel le mouvement du premier segment du premier outil de cintrage et le mouvement du second segment du premier outil de cintrage se trouvent dans une direction qui est perpendiculaire à une direction de parcours du verre, comprenant de préférence de plus le déplacement d'un troisième segment (122) du premier outil de cintrage à partir d'une première position jusqu'à une seconde position pour occasionner une mise en contact avec une troisième portion de la feuille de verre, la mise en contact avec la troisième portion de la feuille de verre ajustant la position de la feuille de verre par rapport à la surface de mise en forme du premier outil de cintrage, dans lequel le mouvement du troisième segment du premier outil de cintrage se trouve dans une direction qui est perpendiculaire à une direction de mouvement du premier segment et va vers un quatrième segment (124) du premier outil de cintrage.

7. Procédé selon la revendication 1 ou la revendication 2, comprenant de plus le déplacement d'un troisième segment (122) du premier outil de cintrage à partir d'une première position jusqu'à une seconde position pour occasionner la mise en contact avec une troisième portion de la feuille de verre, la mise en contact avec la troisième portion de la feuille de verre ajustant la position de la feuille de verre par rapport à la surface de mise en forme du premier outil de cintrage, dans lequel le mouvement du troisième segment du premier outil de cintrage se trouve dans une direction qui est perpendiculaire à une direction de mouvement du premier segment et va vers un quatrième segment (124) du premier outil de cintrage ; dans lequel le mouvement du premier segment du premier outil de cintrage à partir de la première position jusqu'à la seconde position se trouve dans une direction qui va vers un second segment du premier outil de cintrage, comprenant de plus le déplacement du second segment du premier outil de cintrage à partir d'une première position jusqu'à une seconde position pour occasionner la mise en contact avec une seconde portion de la feuille de verre, la mise en contact avec la seconde portion de la feuille de verre ajustant la position de la feuille de verre par rapport à la surface de mise en forme du premier outil de cintrage, dans lequel le mouvement du premier segment du premier outil de cintrage et le mouvement du second segment du premier outil de cintrage se trouvent dans une direction qui est perpendiculaire à une direction de parcours du verre ; comprenant de plus la disposition de la feuille de verre sur le quatrième segment du premier outil de cintrage et occasionnant la mise en contact avec une quatrième portion de la feuille de verre pour ajuster la position de la feuille de verre par rapport à la surface de mise en forme du premier outil de cintrage.

8. Procédé selon la revendication 7, dans lequel les premier segment, second segment, troisième segment, et quatrième segment sont configurés comme un anneau qui supporte la feuille de verre dans une région périphérique de celle-ci, et/ou dans lequel la feuille de verre est également disposée sur le second segment du premier outil de cintrage et le troisième segment du premier outil de cintrage et les premier segment du premier outil de cintrage, second segment du premier outil de cintrage, troisième segment du premier outil de cintrage, et quatrième segment du premier outil de cintrage définissent chacun une portion discrète de la surface de mise en forme et/ou dans lequel le quatrième segment du premier outil de cintrage ne se déplace pas vers le troisième segment du premier outil de cintrage.

9. Procédé selon l'une quelconque des revendications précédentes, dans lequel la première portion de la feuille de verre est une portion de bord de la feuille de verre.

10. Outil de cintrage (112) pour mise en forme d'une feuille de verre, comprenant :
une surface de mise en forme (116) pour supporter une feuille de verre sur son dessus, la surface de mise en forme étant au moins partiellement définie par un premier segment (118) et un second segment (120), dans lequel le premier segment est espacé du second segment et le premier segment est déplaçable à partir d'une première position jusqu'à une seconde position dans une direction qui va vers le second segment ; et
un premier assemblage de positionnement (196) en communication mécanique avec le premier segment, dans lequel le premier assemblage de positionnement est configuré pour être mis en contact avec une première portion de la feuille de verre pour ajuster une position de la feuille de verre par rapport à la surface de mise en forme.

11. Outil de cintrage selon la revendication 10, dans lequel lorsque le premier segment se trouve dans la première position la feuille de verre est déposée sur l'outil de cintrage et lorsque le premier segment se trouve dans la seconde position lorsque la feuille de verre est mise en forme sur le premier outil de cintrage et/ou dans lequel la surface de mise en forme est configurée pour supporter la feuille de verre dans une région périphérique de celle-ci et/ou dans lequel lorsque le premier segment se déplace à partir de la première position jusqu'à la seconde position, le mouvement du premier segment dans la direction vers le second segment est perpendiculaire à une direction de parcours du verre ou semblable comme la direction de parcours du verre et/ou dans lequel le second segment est déplaçable à partir d'une première position jusqu'à une seconde position et dans une direction qui va vers le premier segment, de préférence dans lequel lorsque le second segment se déplace à partir de la première position jusqu'à la seconde position, le mouvement du second segment vers le premier segment est perpendiculaire à une direction de parcours du verre et/ou dans lequel le second segment est déplaçable à partir d'une première position jusqu'à une seconde position et dans une direction qui est perpendiculaire au mouvement du premier segment dans la direction vers le second segment et/ou dans lequel la première portion de la feuille de verre est une portion de bord de colonne, une portion de bord avant, ou une portion de bord arrière de la feuille de verre.

12. Outil de cintrage selon la revendication 10 ou la revendication 11, comprenant de plus un troisième segment (122) qui définit au moins partiellement la surface de mise en forme, de préférence dans lequel le troisième segment est déplaçable dans une direction vers un quatrième segment (124), de préférence dans lequel le troisième segment est configuré pour recevoir une portion de bord arrière de la feuille de verre et/ou dans lequel une première extrémité du premier segment est espacée d'une première extrémité du troisième segment et une seconde extrémité du troisième segment est espacée d'une première extrémité du second segment et/ou dans lequel le quatrième segment est configuré pour recevoir une portion de bord avant de la feuille de verre et n'est pas déplaçable dans une direction qui va vers le troisième segment ; ou comprenant de plus un troisième segment (122) qui définit au moins partiellement la surface de mise en forme, de préférence dans lequel le troisième segment est déplaçable dans une direction qui est identique à une direction de parcours du verre ; ou comprenant de plus un troisième segment (122) qui définit au moins partiellement la surface de mise en forme, dans lequel le troisième segment est déplaçable dans une direction qui est perpendiculaire au mouvement du premier segment dans la direction vers le second segment.

13. Outil de cintrage selon l'une quelconque des revendications 10 à 12, comprenant de plus un second assemblage de positionnement (196A) en communication mécanique avec le premier segment, le second assemblage de positionnement étant espacé du premier assemblage de positionnement et configuré pour être mis en contact avec la première portion de la feuille de verre pour ajuster la position de la feuille de verre par rapport à la surface de mise en forme et/ou comprenant de plus un ou plusieurs assemblages de positionnement en communication mécanique avec le second segment, les un ou plusieurs assemblages de positionnement configurés pour être mis en contact avec une seconde portion de la feuille de verre pour ajuster la position de la feuille de verre par rapport à la surface de mise en forme.

14. Outil de cintrage selon l'une quelconque des revendications 10 à 13, comprenant de plus un cadre (176), dans lequel la feuille de verre se trouve dans une première position par rapport au cadre lorsque le premier segment se trouve dans une première position par rapport au cadre, et la feuille de verre se trouve dans une seconde position par rapport au cadre et la première portion de la feuille de verre est mise en contact avec le premier assemblage de positionnement lorsque le premier segment se trouve dans une seconde position par rapport au cadre.

15. Ligne de mise en forme de verre (100) comprenant un outil de cintrage selon l'une quelconque des revendications 10 à 14, la ligne de mise en forme de verre comprenant de préférence un second outil de cintrage (114), en particulier un moule intégral.
